(19) **Europäisches Patentamt**
**European Patent Office**
**Office européen des brevets**

(11) **EP 4 773 540 A1**

(12) **EUROPEAN PATENT APPLICATION**
published in accordance with Art. 153(4) EPC

(43) Date of publication:
**08.07.2026 Bulletin 2026/28**

(21) Application number: **24877566.0**

(22) Date of filing: **11.10.2024**

(51) International Patent Classification (IPC):
*H04L 5/00* (2006.01)      *H04W 72/232* (2023.01)
*H04W 72/231* (2023.01)      *H04W 72/0446* (2023.01)

(52) Cooperative Patent Classification (CPC):
**H04L 5/00; H04W 72/04; H04W 72/0446;**
**H04W 72/231; H04W 72/232**

(86) International application number:
**PCT/KR2024/015431**

(87) International publication number:
**WO 2025/080031 (17.04.2025 Gazette 2025/16)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.10.2023 KR 20230135726**

(71) Applicant: **Samsung Electronics Co., Ltd.**
**Suwon-si, Gyeonggi-do 16677 (KR)**

(72) Inventors:
• **LEE, Deokhui**
**Suwon-si, Gyeonggi-do 16677 (KR)**
• **KIM, Dongmyung**
**Suwon-si, Gyeonggi-do 16677 (KR)**
• **KIM, Wonjun**
**Suwon-si, Gyeonggi-do 16677 (KR)**
• **LEE, Kitaek**
**Suwon-si, Gyeonggi-do 16677 (KR)**

(74) Representative: **Nederlandsch Octrooibureau**
**P.O. Box 29720**
**2502 LS The Hague (NL)**

(54) **METHOD AND APPARATUS FOR TRANSMITTING AND RECEIVING SIGNAL IN COMMUNICATION SYSTEM**

(57)      The disclosure relates to a 5G or 6G communication system for supporting a higher data transmission rate than a 4G communication system such as LTE. According to an embodiment, a method performed by a UE in a communication system may be provided. According to an embodiment, the method may include: receiving, through higher layer signaling, information related to candidate physical uplink control channel (PUCCH) resources in a first radio access technology (RAT); receiving downlink control information (DCI) for scheduling a physical uplink shared channel (PUSCH) in a second RAT, the DCI including a bit field indicating a candidate PUCCH resource included in the candidate PUCCH resources; performing rate-matching applied to a resource element (RE) overlapping the candidate PUCCH resource from among REs included in the PUSCH; and transmitting the PUSCH to which the rate-matching is applied.

FIG. 16

UE                                                    gNB

1. RRC reconfiguration — 1601

2. RRC reconfiguration complete — 1603

3. MAC CE — 1605

4. DCI 0_0/0_1 (UL grant) — 1607

5. PUSCH — 1609

## Description

### [Technical Field]

The disclosure relates generally to a wireless communication system, and more specifically, to a method for transmitting and receiving a signal in a communication system and an apparatus supporting the same.

### [Background Art]

Looking back at the evolution of wireless communication through successive generations, technologies have primarily been developed for human-centric services such as voice, multimedia, and data. Following the commercialization of the 5th-generation (5G) communication system, an explosive increase in connected devices is expected to be connected to the system. Examples of network-connected objects include vehicles, robots, drones, home appliances, displays, smart sensors installed in various infrastructures, construction machinery, and factory equipment. Furthermore, mobile devices are expected to evolve into diverse form factors, including augmented reality glasses, virtual reality headsets, and holographic devices. To connect hundreds of billions of devices and objects and provide diverse services in the 6G era, continuous efforts are being made to develop enhanced 6G communication systems. For this reason, the 6G communication system is often referred to as a "Beyond 5G" system.

The 6G communication system, expected to be realized around 2030, will have a peak data rate of terabits per second (i.e., 1,000 gigabits per second) and a radio latency of 100 microseconds ($\mu$sec). This means that compared to the 5G communication system, the data rate in the 6G communication system will be 50 times faster, and the latency will be reduced to one-tenth.

To achieve such a high data rate and ultra-low latency, the 6G communication systems are being considered for implementation in the terahertz (THz) band (e.g., from 95 gigahertz (GHz) to 3 THz). Compared to the millimeter wave (mmWave) band introduced in 5G, the terahertz band is expected to experience more severe path loss and atmospheric absorption, making it more important to ensure signal reach (i.e., coverage). To guarantee this coverage, it is essential to develop key technologies, including advanced radio frequency (RF) components, antennas, new waveforms that are superior to orthogonal frequency division multiplexing (OFDM) in terms of coverage, beamforming, and multi-antenna transmission technologies such as massive multiple-input multiple-output (MIMO), full dimensional MIMO (FD-MIMO), array antennas, and large-scale antennas must be developed. In addition, new technologies such as metamaterial-based lenses and antennas, high-dimensional spatial multiplexing technology using orbital angular momentum (OAM), and reconfigurable intelligent surface (RIS) are being discussed to improve the coverage of terahertz band signals.

Moreover, to enhance spectral efficiency and improve system network, several technologies are being developed for the 6G communication system: full-duplex technology that allows uplink and downlink to simultaneously utilize the same frequency resources at the same time; integrated network technology that incorporates satellites and high-altitude platform stations (HAPS); network structure innovation technology that supports mobile base stations and enables optimization and automation of network operation; dynamic spectrum sharing technology through collision avoidance based on spectrum usage prediction; AI-based communication technology that utilizes artificial intelligence (AI) from the design stage and internalizes end-to-end AI support functions to realize system optimization; and next-generation distributed computing technology that realizes services with complexity that exceeds the limits of terminal computing capabilities by utilizing ultra-high-performance communication and computing resources (mobile edge computing (MEC), cloud, etc.). In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

Such research and development of 6G communication systems are expected to enable a new level of hyper-connected experience (the next hyper-connected experience) through the hyper-connectivity of 6G communication systems, which encompass not only connections between things but also connections between people and things. Specifically, 6G communication systems are expected to enable services such as truly immersive extended reality (XR), high-fidelity mobile holograms, and digital replicas. Furthermore, services such as remote surgery, industrial automation, and emergency response, which are provided through 6G communication systems through enhanced security and reliability, will be applied in various fields such as industry, medicine, automobiles, and home appliances.

### [Disclosure of Invention]

### [Technical Problem]

Various embodiments of the disclosure may provide a method for transmitting and receiving signals in a communication system and an apparatus for supporting the same.

Various embodiments of the disclosure may provide a rate matching and/or puncturing method for different radio access technologies (RATs) and/or inter-RAT in a communication system and an apparatus for supporting the same.

Technical problems to be solved by the various embodiments of the disclosure are not limited to those mentioned above, and other technical problems not mentioned can be considered by a person skilled in the art from the various embodiments of the disclosure to be described below.

**[Solution to Problem]**

According to an embodiment, a method performed by a terminal in a wireless communication system may be provided.

According to an embodiment, the method may include receiving information related to candidate physical uplink control channel (PUCCH) resources in a first radio access technology (RAT) via higher layer signaling.

According to an embodiment, the method may include receiving downlink control information (DCI) for scheduling a physical uplink shared channel (PUSCH) in a second RAT.

According to an embodiment, the DCI may include a bit field indicating a candidate PUCCH resource included in the candidate PUCCH resources.

According to an embodiment, the method may include performing rate-matching applied to a resource element (RE) overlapping with the candidate PUCCH resource from among REs included in the PUSCH.

According to an embodiment, the method may include transmitting the PUSCH to which the rate-matching is applied.

According to an embodiment, the number of bits in the bit field may be determined as a value satisfying

$$\lceil \log_2 L \rceil$$

, where L is related to a number of the candidate PUCCH resources.

According to an embodiment, the bit field may indicate a value corresponding to an index of the candidate PUCCH resource.

According to an embodiment, one bit in the bit field may indicate a value corresponding to a time domain location of the candidate PUCCH resource, and remaining bits in the bit field excluding the one bit may indicate a value corresponding to a frequency domain location of the PUCCH resource.

According to an embodiment, in a case where a medium access control (MAC) control element (CE) indicating activated candidate PUCCH resources among the candidate PUCCH resources is received, the bit field is a first bitmap indicating the candidate PUCCH resource included in the activated candidate PUCCH resources, and a size of the first bitmap may be equal to the number of the activated candidate PUCCH resources.

According to an embodiment, in a case where the MAC CE is not received, the bit field is a second bitmap indicating the candidate PUCCH resource included in the candidate PUCCH resources, and a size of the second bitmap may be equal to the number of the candidate PUCCH resources.

According to an embodiment, in the case where the MAC CE is received, the activated candidate PUCCH resources may be applied after a slot offset from a slot where the MAC CE is received.

According to an embodiment, the slot offset may be a predefined value or may be configured via higher layer signaling.

According to an embodiment, the information on the candidate PUCCH resources may include information related to a starting resource block (RB) index of the candidate PUCCH resources in a frequency domain and information related to a number of the candidate PUCCH resources.

According to an embodiment, based on the information related to the starting RB index and the information related to the number of the candidate PUCCH resources being received via the higher layer signaling, the DCI may further includes an indicator of whether the bit field is included in the DCI.

According to an embodiment, when the bit field is set to all '1' or set to all '0', the rate-matching may not be performed.

According to an embodiment, in a case where the RE to which the rate-matching is applied corresponds to symbols included in a first half-slot of a slot for the PUSCH, and a demodulation reference signal (DM-RS) for the PUSCH is configured for one of the symbols included in the first half-slot of the slot for the PUSCH: the RE corresponding to all symbols of the slot for the PUSCH may be rate-matched in an RB corresponding to the candidate PUCCH resource, or the DM-RS may be transmitted in one of symbols included in a second half-slot of the slot for the PUSCH.

According to an embodiment, in a case where a DM-RS for the PUSCH is configured for a first symbol among symbols included in a first half-slot of a slot for the PUSCH and a second symbol among symbols included in a second half-slot of the slot for the PUSCH: when the RE to which the rate-matching is applied corresponds to the symbols included in the first half-slot, the DM-RS configured for the first symbol may not be transmitted and the DM-RS configured for the second symbol may be transmitted, and when the RE to which the rate-matching is applied corresponds to the symbols included in the second half-slot, the DM-RS configured for the first symbol may be transmitted and the DM-RS configured for the second symbol may not be transmitted.

According to an embodiment, a terminal in a wireless communication system may be provided.

According to an embodiment, the terminal may include a transceiver; and a processor connected to the transceiver.

According to an embodiment, the processor may be configured to receive information related to candidate physical uplink control channel (PUCCH) resources in a first radio access technology (RAT) via higher layer signaling.

According to an embodiment, the processor may be configured to receive downlink control information (DCI) for scheduling a physical uplink shared channel (PUSCH) in a second RAT.

According to an embodiment, the processor may be configured such that the DCI includes a bit field indicating a candidate PUCCH resource included in the candidate PUCCH resources.

According to an embodiment, the processor may be configured to perform rate-matching applied to a resource element (RE) overlapping with the candidate PUCCH resource from among REs included in the PUSCH.

According to an embodiment, the processor may be configured to transmit the PUSCH to which the rate-matching is applied.

According to an embodiment, a method performed by a base station in a wireless communication system may be provided.

According to an embodiment, the method may include transmitting information related to candidate physical uplink control channel (PUCCH) resources in a first radio access technology (RAT) via higher layer signaling.

According to an embodiment, the method may include transmitting downlink control information (DCI) for scheduling a physical uplink shared channel (PUSCH) in a second RAT.

According to an embodiment, the DCI may include a bit field indicating a candidate PUCCH resource included in the candidate PUCCH resources.

According to an embodiment, the method may include receiving the PUSCH.

According to an embodiment, rate-matching may be applied to a resource element (RE) overlapping with the candidate PUCCH resource from among REs included in the PUSCH.

According to an embodiment, a base station in a wireless communication system may be provided.

According to an embodiment, the base station may include a transceiver; and a processor connected to the transceiver.

According to an embodiment, the processor may be configured to transmit information related to candidate physical uplink control channel (PUCCH) resources in a first radio access technology (RAT) via higher layer signaling.

According to an embodiment, the processor may be configured to transmit downlink control information (DCI) for scheduling a physical uplink shared channel (PUSCH) in a second RAT.

According to an embodiment, the DCI may include a bit field indicating a candidate PUCCH resource included in the candidate PUCCH resources.

According to an embodiment, the processor may be configured to receive the PUSCH.

According to an embodiment, rate-matching may be applied to a resource element (RE) overlapping with the candidate PUCCH resource from among REs included in the PUSCH.

Various embodiments of the disclosure described above are only some of preferred embodiments of the disclosure, and several embodiments reflecting the technical features of the various embodiments of the disclosure can be derived and understood by a person having ordinary knowledge in the relevant technical field based on the detailed description to be made below.

**[Advantageous Effects of Invention]**

Various embodiments of the disclosure may provide a method for transmitting and receiving signals in a communication system and an apparatus for supporting the same.

Various embodiments of the disclosure may provide a rate matching and/or puncturing method for different radio access technologies (RATs) and/or inter-RAT in a communication system and an apparatus for supporting the same.

Various embodiments of the disclosure may provide a method for indicating a rate matching pattern for a PUCCH resource with low overhead and an apparatus for supporting the same.

Various embodiments of the disclosure may minimize wastage of uplink resources.

Various embodiments of the disclosure may maximize uplink throughput in a spectrum sharing situation.

Effects that can be obtained from the various embodiments of the disclosure are not limited to those mentioned above, and other effects not mentioned can be clearly derived and understood by a person skilled in the art based on the following detailed description.

**[Brief Description of Drawings]**

The accompanying drawings are provided to help understand embodiments of the disclosure provided herein together with detailed descriptions. The technical features of such embodiments of the disclosure are not limited to specific drawings, and the features illustrated in each drawing may be combined with each other to form new embodiments. Reference numerals in each drawing represent structural elements.

FIG. 1 is a diagram illustrating a basic structure of a time-frequency domain in a wireless communication system according to an embodiment of the disclosure.

FIG. 2 is a diagram illustrating structures of a frame, a subframe, and a slot in a wireless communication system according to an embodiment of the disclosure.

FIG. 3 is a diagram illustrating an example of a configuration of a bandwidth part (BWP) in a wireless communication system according to an embodiment of the disclosure.

FIG. 4 is a diagram illustrating radio protocol structures of a base station and a UE in situations of a single cell, carrier aggregation, and dual connectivity in a wireless communication system according to an embodiment of the disclosure.

FIG. 5 is a diagram illustrating a method in which a base station and a UE perform data transmission/reception by considering a downlink data channel and a rate matching resource according to an embodiment of the disclosure.

FIG. 6 is a diagram illustrating an example of a configuration of a control resource set of a downlink control channel in a wireless communication system according to an embodiment of the disclosure.

FIG. 7 is a diagram illustrating an example of a basic unit of time and frequency resources that constitute a downlink control channel that can be used in 5G.

FIG. 8 is a diagram illustrating an example of frequency-domain resource allocation of a PDSCH or a PUSCH in a wireless communication system according to an embodiment of the disclosure.

FIG. 9 is a diagram illustrating a VRB-PRB interleaving scheme of a PDSCH in FDRA type-1 resource allocation according to an embodiment of the disclosure.

FIG. 10 is a diagram illustrating an example of time-domain resource allocation of a PDSCH in a wireless communication system according to an embodiment of the disclosure.

FIG. 11 is a diagram illustrating an example of an LTE/NR DSS scenario to which an embodiment of the disclosure is applicable.

FIG. 12 is a diagram illustrating an example of LTE PUCCH allocation to which an embodiment of the disclosure is applicable.

FIG. 13 is a diagram illustrating an example of an LTE/NR DSS scenario to which an embodiment of the disclosure is applicable.

FIG. 14 is a diagram illustrating an example of an LTE/NR DSS scenario to which an embodiment of the disclosure is applicable.

FIG. 15 illustrates an example of a rate matching method in a communication system to which an embodiment of the disclosure is applicable.

FIG. 16 is a diagram illustrating an example of a signaling procedure between a UE and a base station according to an embodiment of the disclosure.

FIG. 17 is a diagram illustrating an example of an RRC parameter according to an embodiment of the disclosure.

FIG. 18 is a diagram illustrating an example of a bit field in a DCI according to an embodiment of the disclosure.

FIG. 19 is a diagram illustrating an example of the relationship between a bitmap included in a MAC CE and a bitmap included in DCI according to an embodiment of the disclosure.

FIG. 20 is a diagram illustrating an example of the relationship between a bitmap included in a MAC CE and a bitmap included in DCI according to an embodiment of the disclosure.

FIG. 21 is a diagram illustrating a DM-RS applicable to PUSCH transmission according to an embodiment of the disclosure.

FIG. 22 is a diagram illustrating a DM-RS applicable to PUSCH transmission according to an embodiment of the disclosure.

FIG. 23 is a diagram illustrating a DM-RS applicable to PUSCH transmission according to an embodiment of the disclosure.

FIG. 24 is a diagram illustrating a DM-RS applicable to PUSCH transmission according to an embodiment of the disclosure.

FIG. 25 is a diagram illustrating an example of an operation flowchart of a UE according to an embodiment of the disclosure.

FIG. 26 is a drawing illustrating an example of an operation flowchart of a base station according to an embodiment of the disclosure.

FIG. 27 is a diagram illustrating the structure of a UE in a wireless communication system according to an embodiment of the disclosure.

FIG. 28 is a diagram illustrating the structure of a base station in a wireless communication system according to an embodiment of the disclosure.

**[Mode for the Invention]**

Hereinafter, embodiments of the disclosure will be described in detail with reference to the accompanying drawings.

In describing embodiments of the disclosure, descriptions of technical contents well-known in the art and not directly related to the disclosure will be omitted. This is to more clearly convey the subject matter of the disclosure without obscuring it by omitting unnecessary description.

For the same reason, some elements are exaggerated, omitted, or schematically illustrated in the accompanying drawings. In addition, the depicted size of each element does not completely reflect the actual size. In the drawings, the same or corresponding elements are assigned the same reference numerals.

The advantages and features of the disclosure and the manner of achieving them will become apparent with reference to embodiments described in detail below and with reference to the accompanying drawings. The disclosure may, however, be embodied in many different forms and should not be construed as being limited to the embodiments set forth herein. Rather, these embodiments are provided so that the disclosure will be thorough and complete and will fully convey the scope of the disclosure to those skilled in the art. The disclosure is only defined by the scope of claims. In the disclosure, the same reference numerals are used to indicate the same elements. In addition, if it is determined that a detailed description of a related function or configuration unnecessarily obscures the subject matter of the disclosure, the detailed description will be omitted. Further, the terms used herein are terms defined in consideration of functions in the disclosure, and may vary according to a user's or operator's intention or customs. Therefore, the definition should be made based on the content throughout the disclosure.

In the disclosure, although the embodiments are described using terms used in some communication standards (e.g., long term evolution (LTE) and new radio (NR) defined by 3rd generation partnership project (3GPP)), this is exemplary only for explanation. The embodiments of the disclosure can be easily modified and applied to other communication systems. That is, the disclosure is not limited to the 5G communication system or the LTE communication system, and can also be applied to 6G and subsequent communication systems.

In the disclosure, a base station refers to an entity performing resource allocation of a terminal, and may be at least one of a gNode B (gNB), an eNode B (eNB), a Node B, a base station (BS), a radio access unit, a base station controller, or a node on a network. Also, a terminal may include a user equipment (UE), a mobile station (MS), a cellular phone, a smart phone, a computer, or a multimedia system capable of performing a communication function. In the disclosure, a downlink (DL) refers to a wireless transmission path of a signal transmitted from a base station to a terminal, and an uplink (UL) refers to a wireless transmission path of a signal transmitted from a terminal to a base station. Further, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, NR) developed beyond LTE-A, and in the following description, the 5G covers the existing LTE, LTE-A, or other similar services. In addition, based on determinations by those skilled in the art, the embodiments of the disclosure may also be applied to other communication systems through some modifications without significantly departing from the scope of the disclosure.

It will be understood that each block of the flowchart illustrations, and combinations of blocks in the flowchart illustrations, may be implemented by computer program instructions. These computer program instructions may be provided to a processor of a general purpose computer, special purpose computer, or other programmable data processing apparatus to produce a machine, such that the instructions, which are executed via the processor of the computer or other programmable data processing apparatus, generate means for implementing the functions specified in the flowchart block(s). These computer program instructions may also be stored in a computer usable or computer-readable memory that may direct a computer or other programmable data processing apparatus to function in a particular manner, such that the instructions stored in the computer usable or computer-readable memory produce an article of manufacture including instruction means that implement the function specified in the flowchart block(s). The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block(s).

In addition, each block may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term 'unit' used in embodiments refers to a software or hardware component such as a field programmable gate array (FPGA) or application specific integrated circuit (ASIC), and the 'unit' performs certain tasks. However, the 'unit' is not limited to software or hardware. The 'unit' may be constituted to reside on an addressable storage medium and constituted to execute on one or more processors. Thus, the 'unit' may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and 'units' may be combined into fewer components and 'units' or further separated into additional components and 'units'. In addition, the components and 'units' may be implemented to operate one or more central processing units (CPUs) in a device or a secure multimedia card. Also, in embodiments, the 'unit' may include one or more processors.

Wireless communication systems have expanded beyond the original role of providing a voice-oriented service and have evolved into wideband wireless communication systems that provide a high-speed and high-quality packet data service according to, for example, communication standards such as high-speed packet access (HSPA), long-term evolution (LTE or evolved universal terrestrial radio access (E-UTRA)), and LTE-advanced (LTE-A) of 3GPP, high-rate packet data (HRPD) and a ultra-mobile broadband (UMB) of 3GPP2, and 802.16e of IEEE.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink indicates a radio link through which a user equipment (UE) or a mobile station (MS) transmits data or control signals to a base station (BS or eNode B), and the downlink indicates a radio link through which the base station transmits data or control signals to the UE. The above multi-access scheme may distinguish data or control information of respective users by allocating and operating time-frequency resources for transmitting the data or control information for each user so that they do not overlap with each other, i.e., so that orthogonality is established.

Since the 5G communication system, as a future communication system beyond LTE, should be able to freely reflect various needs of users, service providers, etc., services that simultaneously satisfy various requirements should be supported. The services being considered for the 5G communication system include enhanced Mobile Broadband (eMBB) communication, massive Machine Type Communication (mMTC), and Ultra-Reliability Low-Latency Communication (URLLC).

The eMBB aims to provide a data transmission rate further improved than that supported by existing LTE, LTE-A, or LTE-Pro. For example, in the 5G communication system, the eMBB should be able to provide a peak data rate of 20 Gbps in downlink and a peak data rate of 10 Gbps in uplink from the perspective of a single base station. Furthermore, the 5G communication system should provide an increased user-perceived data rate of a UE simultaneously with providing the peak data rate. To meet such requirements, improvements in various transmission and reception technologies, including a further improved Multi-Input Multi-Output (MIMO) transmission technology, are required. In addition, while LTE transmits signals using a maximum transmission bandwidth of 20 MHz in a 2 GHz band, the 5G communication system can satisfy the required data rate by using a wider frequency bandwidth than 20 MHz in a frequency band of 3 to 6 GHz or 6 GHz or higher.

In addition, the mMTC is being considered to support application services such as the Internet of things (IoT) in the 5G communication system. In order to efficiently provide the IoT, the mMTC is required to support connection of a large number of UEs in a cell, improve coverage of UEs, increase battery time, and reduce cost of a UE. Since the IoT provides communication functions by being attached to various sensors and various devices, it should be able to support a large number of UEs (e.g., 1,000,000 UEs/km$^2$) in a cell. In addition, the UE supporting the mMTC may require a wider coverage compared to other services provided in the 5G communication system because it is highly likely to be located in a shadow area that the cell cannot cover, such as a basement of a building, due to the characteristics of the service. The UE supporting the mMTC should be configured to be inexpensive, and a very long battery life-time, such as 10 to 15 years, may be required because it is difficult to frequently replace the battery of the UE.

Lastly, the URLLC is a cellular-based wireless communication service used for a specific purpose (mission-critical). For example, services be used for remote control for a robot or machinery, industrial automation, unmanned aerial vehicles, remote health care, emergency alerts, and the like may be considered. Therefore, communication provided by the URLLC should provide ultra-low latency and ultra-high reliability. For example, a service supporting the URLLC should satisfy an air interface latency smaller than 0.5 milliseconds, and simultaneously has a requirement of a packet error rate of $10^{-5}$ or less. Therefore, for a service supporting the URLLC, the 5G system should provide a shorter transmit time Interval (TTI) than other services, and simultaneously, a design requirement to allocate wide resources in a frequency band in order to secure reliability of a communication link may be required.

The three services of 5G, namely eMBB, URLLC, and mMTC, may be multiplexed and transmitted in a single system. In this case, different transmission/reception techniques and transmission/reception parameters may be used between services in order to satisfy different requirements of respective services. Of course, 5G is not limited to the aforementioned three services.

Hereinafter, "a/b" may be understood as at least one of "a" and "b".

[NR Time-Frequency Resource]

Hereinafter, the frame structure of the 5G system will be described in more detail with reference to the drawings.

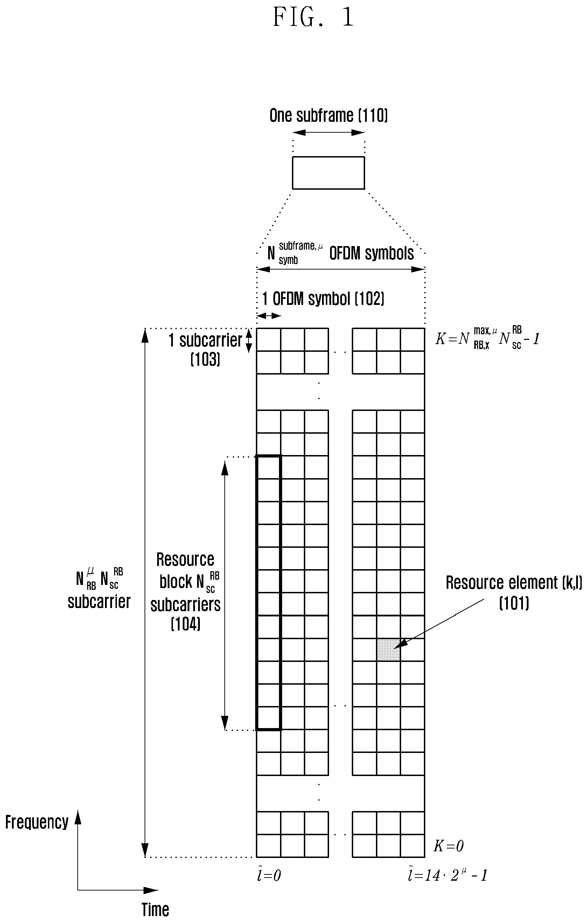

FIG. 1 is a diagram illustrating a basic structure of a time-frequency domain which is a radio resource domain where a data or control channel is transmitted in the 5G system.

In FIG. 1, the horizontal axis represents a time domain, and the vertical axis represents a frequency domain. A basic unit of resources in the time-frequency domain is a resource element (RE) 101, which may be defined as one OFDM symbol 102 in the time domain and one subcarrier 103 in the frequency domain. In the frequency domain, $N_{SC}^{RB}$ (e.g., 12) consecutive REs may constitute one resource block (RB) 104. In the time domain, one subframe 110 may include a plurality of OFDM symbols 102. For example, the length of one subframe may be 1 ms.

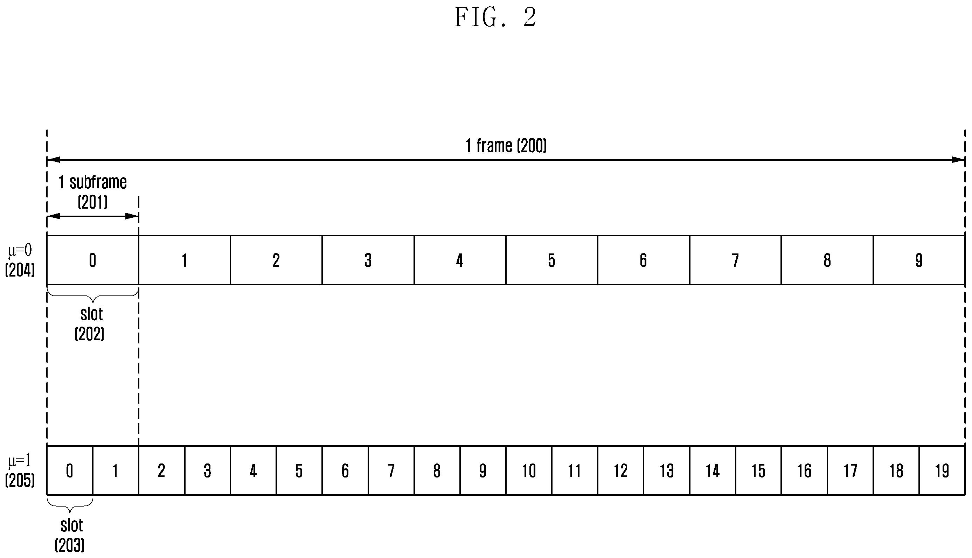

FIG. 2 is a diagram illustrating structures of a frame, a subframe, and a slot in a wireless communication system according to an embodiment of the disclosure.

In FIG. 2, an example of structures of a frame 200, a subframe 201, and a slot 202 is illustrated. One frame 200 may be defined as 10 ms. One subframe 201 may be defined as 1 ms, and thus the one frame 200 may be composed of ten subframes 201 in total. One slot 202 or 203 may be defined as fourteen OFDM symbols (i.e., the number of symbols per slot, $N_{symb}^{slot}=14$). One subframe 201 may be composed of one or multiple slots 202 and 203, and the number of slots 202 and 203 per one subframe 201 may differ according to a configuration value $\mu$ 204 or 205 for a subcarrier spacing. In the example of FIG. 2, a case 204 of $\mu=0$ and a case 205 of $\mu=1$ are illustrated as the subcarrier spacing configuration value. In the case 204 of $\mu=0$, one subframe 201 may be composed of one slot 202, and in the case 205 of $\mu=1$, the one subframe 201 may be composed of two slots 203. That is, the number of slots per one subframe ($N_{slot}^{subframe,\mu}$) may differ according to the subcarrier spacing configuration value $\mu$, and accordingly, the number of slots per one frame ($N_{slot}^{frame,\mu}$) may differ. $N_{slot}^{subframe,\mu}$ and $N_{slot}^{frame,\mu}$ according to each subcarrier spacing configuration $\mu$ may be defined as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth Part (BWP)]

Next, the BWP configuration in a 5G communication system will be described in detail with reference to the drawings.

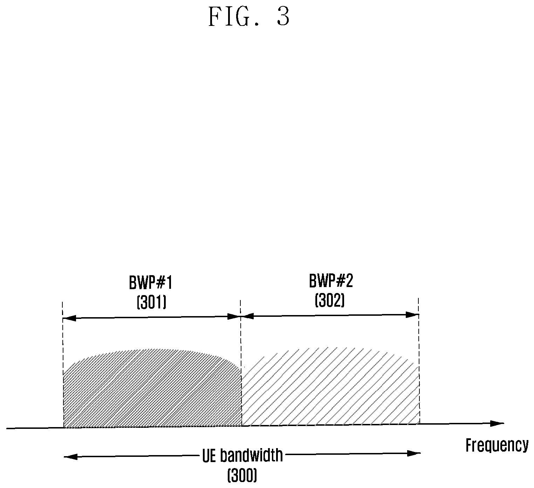

FIG. 3 is a diagram illustrating an example of the BWP configuration in a wireless communication system according to an embodiment of the disclosure.

In FIG. 3, an example is shown in which a UE bandwidth 300 is configured as two BWPs, i.e., BWP#1 301 and BWP#2 302. The base station may configure one or multiple BWPs for the UE, and may configure the following Table 2 information for each BWP.

[Table 2]

| BWP ::= | SEQUENCE { |
|---|---|
| bwp-Id | BWP-Id, |
| (bandwidth part identifier) | |
| locationAndBandwidth | INTEGER (1..65536), |
| (bandwidth part location) | |
| subcarrierSpacing | ENUMERATED {n0, n1, n2, n3, n4, n5}, |
| (subcarrier spacing) | |

| cyclicPrefix | ENUMERATED { extended } |
|---|---|
| (cyclic prefix) | |
| } | |

The above example is not a limitation, and various parameters related to the BWP may be configured for the UE in addition to the above configuration information. The above information may be transmitted by the base station to the UE via higher layer signaling, for example, radio resource control (RRC) signaling. At least one BWP among the configured one or multiple BWPs may be activated. Whether to activate the configured BWP may be semi-statically transmitted from the base station to the UE via RRC signaling or may be dynamically transmitted through downlink control information (DCI).

According to some embodiments, the UE before RRC connected may be configured with an initial BWP for initial access from the base station through a master information block (MIB). More specifically, in an initial access stage, the UE may receive, through the MIB, configuration information on a control resource set (CORESET) and a search space through which a PDCCH for reception of system information (which may correspond to remaining system information (RMSI) or system information block 1 (SIB1)) required for the initial access can be transmitted. The CORESET and the search space configured through the MIB may be regarded as identity (ID) 0, respectively. The base station may notify the UE, through the MIB, of configuration information such as frequency allocation information, time allocation information, and numerology for CORESET#0. In addition, the base station may notify the UE, through the MIB, of configuration information on a monitoring periodicity and a monitoring occasion for CORESET#0, that is, configuration information on search space#0. The UE may regard a frequency domain configured as CORESET#0, obtained from the MIB, as the initial BWP for the initial access. In this case, the ID of the initial BWP may be regarded as 0.

The BWP configuration supported by the 5G may be used for various purposes.

According to some embodiments, in a case where a bandwidth supported by the UE is smaller than a system bandwidth, such a case may be supported through the BWP configuration. For example, the base station may configure a frequency location (configuration information 2) of the BWP to the UE, so that the UE may transmit or receive data at a specific frequency location within the system bandwidth.

In addition, according to some embodiments, the base station may configure a plurality of BWPs to the UE for the purpose of supporting different numerologies. For example, in order to support data transmission/reception using both a subcarrier spacing of 15 kHz and a subcarrier spacing of 30 kHz for a certain UE, two BWPs may be configured with the subcarrier spacing of 15 kHz and the subcarrier spacing of 30 kHz, respectively. Different BWPs may be frequency division multiplexed (FDM), and in a case where data is to be transmitted or received at a specific subcarrier spacing, a BWP configured with the corresponding subcarrier spacing may be activated.

In addition, according to some embodiments, the base station may configure BWPs having different bandwidth sizes for the UE for the purpose of reducing power consumption of the UE. For example, in a case where the UE supports a very large bandwidth, e.g., a bandwidth of 100 MHz, and always transmits or receives data through the corresponding bandwidth, very large power consumption may occur. In particular, performing monitoring on an unnecessary downlink control channel with a large bandwidth of 100 MHz in a situation where there is no traffic may be very inefficient in terms of power consumption. For the purpose of reducing power consumption of the UE, the base station may configure a BWP of a relatively small bandwidth, e.g., a BWP of 20 MHz, for the UE. In the situation where there is no traffic, the UE may perform a monitoring operation in the 20 MHz BWP, and when data is generated, the UE may transmit or receive data in the 100 MHz BWP according to an indication from the base station.

In the method of configuring the BWP, the UEs before RRC connected may receive configuration information on an initial BWP via an MIB in an initial access stage. More specifically, the UE may be configured with a CORESET for a downlink control channel, through which DCI for scheduling a system information block (SIB) can be transmitted, from the MIB of a physical broadcast channel (PBCH). A bandwidth of the CORESET configured via the MIB may be regarded as the initial BWP, and the UE may receive, through the configured initial BWP, a physical downlink shared channel (PDSCH) through which the SIB is transmitted. The initial BWP may be utilized for other system information (OSI), paging, and random access, as well as for receiving the SIB.

[Bandwidth Part (BWP) Switch]

In a case where one or more BWPs have been configured for the UE, the base station may indicate a switch (or switching, transition) of the BWP to the UE by using a BWP indicator field in DCI. As an example, in FIG. 3, when the currently activated BWP of the UE is BWP#1 301, the base station may indicate BWP#2 302 to the UE via the BWP indicator in DCI, and the UE may perform the BWP switch to the BWP#2 302 indicated by the BWP indicator in the received DCI.

As described above, since the DCI-based BWP switch may be indicated by the DCI that schedules the PDSCH or the PUSCH, the UE that receives a request to switch the BWP needs to smoothly receive or transmit the PDSCH or the PUSCH, which is scheduled by the DCI, without difficulty in the switched BWP. To this end, the standard specifies requirements for a delay time ($T_{BWP}$) required when switching the BWP, which may be defined, for example, as shown in Table 3 below.

[Table 3]

| $\mu$ | NR Slot length (ms) | BWP switch delay $T_{BWP}$ (slots) | |
| --- | --- | --- | --- |
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. <br> Note 2: If the BWP switch involves changing of SCS, the BWP switch delay is determined by the larger one between the SCS before BWP switch and the SCS after BWP switch. | | | |

The requirements for the BWP switch delay time support Type 1 or Type 2 depending on UE capability. The UE may report a supportable type of BWP switch delay time to the base station.

When the UE receives the DCI including the BWP switch indicator in slot n according to the requirements for the BWP switch delay time, the UE may complete switching to a new BWP indicated by the BWP switch indicator at a point in time not later than slot $n+T_{BWP}$, and may perform transmission or reception of a data channel scheduled by the corresponding DCI in the new switched BWP. When the base station intends to schedule the data channel in the new BWP, the base station may determine time domain resource allocation for the data channel in consideration of the BWP switch delay time ($T_{BWP}$) of the UE. That is, in a method of determining the time domain resource allocation for the data channel when scheduling the data channel in the new BWP, the base station may schedule the corresponding data channel after the BWP switch delay time. Therefore, the UE may not expect that the DCI indicating the BWP switch indicates a slot offset (K0 or K2) value smaller than the BWP switch delay time ($T_{BWP}$).

If the UE receives the DCI (e.g., DCI format 1_1 or 0_1) indicating the BWP switch, the UE may not perform any transmission or reception during a time interval from the third symbol of a slot in which the PDCCH including the DCI is received to the start time of a slot indicated by the slot offset (K0 or K2) value indicated by the time domain resource allocation indicator field in the DCI. For example, if the UE receives the DCI indicating the BWP switch in slot *n*, and if the slot offset value indicated by the DCI is K, the UE may not perform any transmission or reception from the third symbol of slot n to the symbol prior to slot *n+K* (i.e., the last symbol of slot *n+K-1)*.

[CA/DC Related]

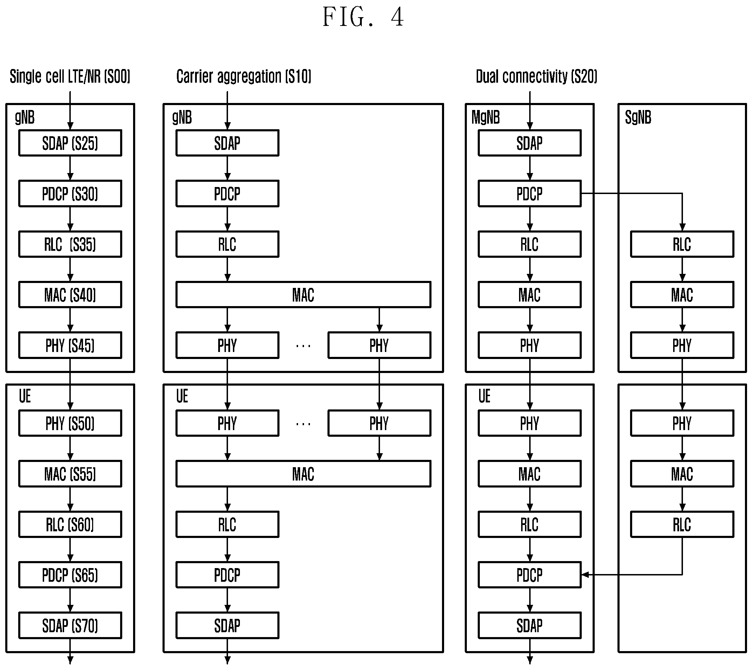

FIG. 4 is a diagram illustrating radio protocol structures of a base station and a UE in situations of a single cell, carrier aggregation, and dual connectivity according to an embodiment of the disclosure.

Referring to FIG. 4, a radio protocol of a next-generation mobile communication system in each of the UE and the NR base station includes an NR service data adaptation protocol (NR SDAP) S25 or S70, an NR packet data convergence protocol (NR PDCP) S30 or S65, an NR radio link control (NR RLC) S35 or S60, and an NR medium access control (NR MAC) S40 or S55.

The main functions of the NR SDAP S25 or S70 may include some of the following functions:

- a function of transferring user data (Transfer of user plane data);
- a function of mapping between a QoS flow and a data bearer for both uplink and downlink (Mapping between a QoS flow and a DRB for both DL and UL);
- a function of marking a QoS flow ID in both uplink and downlink (Marking QoS flow ID in both DL and UL packets); and
- a function of mapping a reflective QoS flow to a data bearer for uplink SDAP PDUs (Reflective QoS flow to DRB mapping for the UL SDAP PDUs).

With respect to the SDAP layer device, the UE may be configured, through an RRC message, as to whether to use a header of the SDAP layer entity or whether to use a function of the SDAP layer entity for each PDCP layer entity, each bearer, or each logical channel. If the SDAP header is configured, a 1-bit NAS reflective QoS indicator and a 1-bit AS reflective QoS indicator of the SDAP header may indicate that the UE can update or reconfigure mapping information between a QoS flow and a data bearer for uplink and downlink. The SDAP header may include QoS flow ID information indicating the QoS. The QoS information may be used as data processing priority, scheduling information, etc. in order to support a seamless service.

The main functions of the NR PDCP S30 or S65 may include some of the following functions:

- a header compression and decompression function (Header compression and decompression: ROHC only);
- a user data transmission function (Transfer of user data);
- an in-sequence delivery function (In-sequence delivery of upper layer PDUs);
- an out-of-sequence delivery function (Out-of-sequence delivery of upper layer PDUs);
- a reordering function (PDCP PDU reordering for reception);
- a duplicate detection function (Duplicate detection of lower layer SDUs);
- a retransmission function (Retransmission of PDCP SDUs);
- a ciphering and deciphering function (Ciphering and deciphering); and
- a timer-based SDU discard function (Timer-based SDU discard in uplink).

In the above description, the reordering function of the NR PDCP entity refers to a function of reordering PDCP PDUs received from a lower layer based on a PDCP sequence number (SN), and may include a function of delivering data to an upper layer in the reordered order. Alternatively, the reordering function of the NR PDCP entity may include a function of immediately delivering data without considering the order, a function of recording lost PDCP PDUs by reordering the order, a function of performing status reporting for the lost PDCP PDUs to a transmitting side, or a function of requesting retransmission of the lost PDCP PDUs.

The main functions of the NR RLC S35 or S60 may include some of the following functions:

- a data transmission function (Transfer of upper layer PDUs);
- an in-sequence delivery function (In-sequence delivery of upper layer PDUs);
- an out-of-order delivery function (Out-of-sequence delivery of upper layer PDUs);
- an ARQ function (Error correction through ARQ);
- a concatenation, segmentation, and reassembly function (Concatenation, segmentation and reassembly of RLC SDUs);
- a re-segmentation function (Re-segmentation of RLC data PDUs);
- a reordering function (Reordering of RLC data PDUs);
- a duplicate detection function (Duplicate detection);
- an error detection function (Protocol error detection);

- an RLC SDU discard function (RLC SDU discard); and
- an RLC re-establishment function (RLC re-establishment).

In the above description, the in-sequence delivery function of the NR RLC entity refers to a function of delivering RLC PDUs received from a lower layer to an upper layer in order. The in-sequence delivery function of the NR RLC entity may include a function of, in a case where one original RLC SDU is received by being segmented into a plurality of RLC SDUs, reassembling and delivering them. The in-sequence delivery function may include a function of reordering the received RLC PDUs on the basis of an RLC sequence number (SN) or a PDCP SN, a function of recording lost RLC PDUs by reordering, a function of performing status reporting for the lost RLC PDUs to a transmitting side, and a function of requesting retransmission of the lost RLC PDUs. In a case where there is a lost RLC SDU, the in-sequence delivery function of the NR RLC entity may include a function of sequentially delivering only RLC SDUs prior to the lost RLC SDU to the upper layer. Alternatively, even if there is a lost RLC SDU, if a predetermined timer expires, the in-sequence delivery function may include a function of sequentially delivering all RLC SDUs received before the timer started to the upper layer, or a function of sequentially delivering all RLC SDUs received up to the present to the upper layer. In addition, the RLC PDUs may be processed in the order in which they are received (regardless of the order of sequence numbers) and delivered to the PDCP entity out-of-sequence. In the case of segments, the segments stored in a buffer or to be received later may be reassembled into one complete RLC PDU, which is then processed and delivered to the PDCP entity. The NR RLC layer may not include a concatenation function, and this function may be performed in the NR MAC layer or replaced with a multiplexing function of the NR MAC layer.

In the above description, the out-of-sequence delivery function of the NR RLC device refers to a function of directly delivering RLC SDUs received from a lower layer to an upper layer regardless of the order. In a case where one original RLC SDU is received by being segmented into a plurality of RLC SDUs, the out-of-sequence delivery function may include a function of reassembling and delivering them, and a function of storing RLC SNs or PDCP SNs of the received RLC PDUs, reordering the order, and recording lost RLC PDUs.

The NR MAC S40 or S55 may be connected to a plurality of NR RLC layer entities configured in one UE, and the main functions of the NR MAC may include some of the following functions:

- a mapping function (Mapping between logical channels and transport channels);
- a multiplexing and demultiplexing function (Multiplexing/demultiplexing of MAC SDUs);
- a scheduling information reporting function (Scheduling information reporting);
- an HARQ function (Error correction through HARQ);
- a logical channel priority adjusting function (Priority handling between logical channels of one UE);
- a UE priority adjusting function (Priority handling between UEs by means of dynamic scheduling);
- an MBMS service identification function (MBMS service identification);
- a transport format selection function (Transport format selection); and
- a padding function (Padding).

The NR PHY layer S45 or S50 may perform operations of channel-coding and modulating upper layer data to generate OFDM symbols and transmitting them through a radio channel, or demodulating and channel-decoding OFDM symbols received through a radio channel and transmitting them to an upper layer.

The radio protocol structure may be variously changed in detailed structure according to a carrier (or cell) operation scheme. For example, in a case where the base station transmits data to the UE based on a single carrier (or cell), the base station and the UE use a protocol structure having a single structure for each layer as in S00. On the other hand, in a case where the base station transmits data to the UE based on carrier aggregation (CA) using multiple carriers in a single TRP, the base station and the UE use a protocol structure having a single structure up to RLC but multiplexing PHY layers through a MAC layer as in S10. As another example, in a case where the base station transmits data to the UE based on dual connectivity (DC) using multiple carriers in multiple TRPs, the base station and the UE use a protocol structure having a single structure up to RLC but multiplexing PHY layers through a MAC layer as in S20.

[Rate Matching/Puncturing Related]

Hereinafter, a rate matching operation and a puncturing operation will be described in detail.

In a case where a time and frequency resource A for transmitting a certain symbol sequence A overlaps with a certain time and frequency resource B, a rate matching or puncturing operation may be considered for a transmission and reception operation of a channel A in consideration of a resource C, which is a region where the resource A and the resource B overlap. A specific operation may follow the details below.

Rate Matching Operation

- The base station may transmit the channel *A* by mapping it only to the remaining resource regions, excluding the resource *C* corresponding to a region overlapping with the resource *B,* among the entire resource *A* for transmitting the symbol sequence *A* to the UE. For example, if the symbol sequence *A* consists of {symbol #1, symbol #2, symbol #3, symbol 4}, the resource *A* consists of {resource #1, resource #2, resource #3, resource #4}, and the resource *B* consists of {resource #3, resource #5}, then the base station may sequentially map the symbol sequence *A* to {resource #1, resource #2, resource #4}, which are the remaining resources excluding {resource #3} corresponding to the resource *C* in the resource *A*. As a result, the base station may transmit the symbol sequence {symbol #1, symbol #2, symbol #3} by mapping it to {resource #1, resource #2, resource #4}, respectively.

The UE may determine the resource *A* and the resource *B* from scheduling information for the symbol sequence *A* received from the base station, and thereby may determine the resource *C* which is a region where the resource *A* and the resource *B* overlap. The UE may receive the symbol sequence *A* on the assumption that the symbol sequence A is mapped to and transmitted in the remaining regions excluding the resource *C* among the entire resource *A*. For example, if the symbol sequence *A* consists of {symbol #1, symbol #2, symbol #3, symbol 4}, the resource *A* consists of {resource #1, resource #2, resource #3, resource #4}, and the resource *B* consists of {resource #3, resource #5}, then the UE may receive the symbol sequence *A* on the assumption that the symbol sequence A is sequentially mapped to {resource #1, resource #2, resource #4}, which are the remaining resources excluding {resource #3} corresponding to the resource *C* in the resource *A*. As a result, the UE may perform a subsequent reception operation assuming that the symbol sequence {symbol #1, symbol #2, symbol #3} is mapped to and transmitted in {resource #1, resource #2, resource #4}, respectively.

Puncturing Operation

In a case where there is the resource *C* corresponding to a region overlapping with the resource *B* among the entire resource *A* for transmitting the symbol sequence *A* to the UE, the base station may map the symbol sequence *A* to the entire resource *A*, but may perform transmission only in the remaining resource regions excluding the resource *C* in the entire resource *A* without performing transmission in the resource region corresponding to the resource *C*. For example, if the symbol sequence *A* consists of {symbol #1, symbol #2, symbol #3, symbol 4}, the resource *A* consists of {resource #1, resource #2, resource #3, resource #4}, and the resource *B* consists of {resource #3, resource #5}, then the base station may map the symbol sequence *A* {symbol #1, symbol #2, symbol #3, symbol #4} to the resource *A* {resource #1, resource #2, resource #3, resource #4}, respectively, and may transmit only a symbol sequence {symbol #1, symbol #2, symbol #4} corresponding to {resource #1, resource #2, resource #4}, which are the remaining resources excluding {resource #3} corresponding to the resource *C* in the resource *A*, while not transmitting {symbol #3} mapped to {resource #3) corresponding to the resource *C*. As a result, the base station may transmit the symbol sequence {symbol #1, symbol #2, symbol #4} by mapping it to {resource #1, resource #2, resource #4}, respectively.

The UE may determine the resource *A* and the resource *B* from scheduling information for the symbol sequence *A* received from the base station, and thereby determine the resource *C* which is a region where the resource *A* and the resource *B* overlap. The UE may receive the symbol sequence *A* on the assumption that the symbol sequence *A* is mapped to the entire resource *A* but transmitted only in the remaining regions excluding the resource *C* in the resource *A*. For example, if the symbol sequence *A* consists of {symbol #1, symbol #2, symbol #3, symbol 4}, the resource *A* consists of {resource #1, resource #2, resource #3, resource #4}, and the resource *B* consists of {resource #3, resource #5}, then the UE may assume that the symbol sequence *A* {symbol #1, symbol #2, symbol #3, symbol 4} is mapped to {resource #1, resource #2, resource #3, resource #4}, respectively, but {symbol #3} mapped to {resource #3} corresponding to the resource *C* is not transmitted. Also, the UE may receive a symbol sequence {symbol #1, symbol #2, symbol #4} corresponding to the remaining resources {resource #1, resource #2, resource #4}, excluding {resource #3} corresponding to the resource *C* among the resource *A*, by assuming that the sequence was mapped and transmitted. As a result, the UE perform a subsequent reception operation assuming that the symbol sequence {symbol #1, symbol #2, symbol #4} is mapped to and transmitted in {resource #1, resource #2, resource #4}, respectively.

Hereinafter, a method for configuring a rate matching resource for the purpose of rate matching in the 5G communication system will be described. The rate matching refers to adjusting the size of a signal by considering the amount of resources capable of transmitting the signal. For example, the rate matching of a data channel may mean that the size of data is adjusted without mapping and transmitting the data channel for a specific time and frequency resource region.

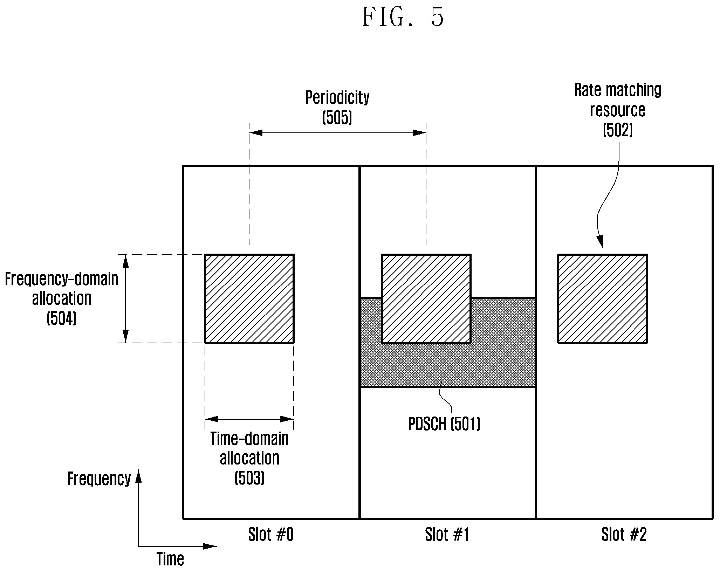

FIG. 5 is a diagram illustrating a method in which a base station and a UE perform data transmission and reception by considering a downlink data channel and a rate matching resource.

FIG. 5 shows a downlink data channel (PDSCH) 501 and a rate matching resource 502. The base station may configure one or more rate matching resources 502 for the UE through higher layer signaling (e.g., RRC signaling). The configuration information for the rate matching resource 502 may include time-domain resource allocation information 503, frequency-domain resource allocation information 504, and periodicity information 505. Hereinafter, a bitmap corresponding to the frequency-domain resource allocation information 504 is referred to as a "first bitmap", a bitmap corresponding to the time-domain resource allocation information 503 is referred to as a "second bitmap", and a bitmap corresponding to the periodicity information 505 is referred to as a "third bitmap". If all or part of the time and frequency resources of the scheduled data channel 501 overlap with the configured rate matching resource 502, the base station may rate-match the data channel 501 on the rate matching resource 502 portion for transmission, and the UE may perform reception and decoding by assuming that the data channel 501 is rate-matched in the portion of the rate matching resource 502.

The base station may dynamically notify the UE, via DCI, of whether to perform rate matching for the data channel in the configured rate matching resource portion through an additional configuration (corresponding to the "rate matching indicator" in the aforementioned DCI format). Specifically, the base station may select some of the configured rate matching resources and group them into a rate matching resource group, and may indicate to the UE whether to perform rate matching for the data channel for each rate matching resource group by using a bitmap scheme in the DCI. For example, if four rate matching resources RMR#1, RMR#2, RMR#3, and RMR#4 are configured, the base station may configure RMG#1={RMR#1, RMR#2} and RMG#2={RMR#3, RMR#4} as rate matching groups, and may indicate to the UE whether to perform rate matching in RMG#1 and RMG#2, respectively, using 2 bits in a DCI field in the form of a bitmap. For example, the base station may indicate "1" if rate matching is to be performed, and "0" if rate matching is not to be performed.

The 5G supports "RB symbol level" and "RE level" granularities as methods for configuring the above-described rate matching resource for the UE. Specifically, the following configuration methods may be followed.

RB Symbol Level

The UE may be configured with a maximum of four RateMatchPatterns per BWP via higher layer signaling, and one RateMatchPattern may include the following information.

- As a reserved resource within the BWP, a resource of which time and frequency resource region is configured by a combination of an RB-level bitmap and a symbol-level bitmap may be included. The reserved resource may span over one or two slots. Additionally, a time-domain pattern (periodicityAndPattern) may be configured, in which the time and frequency region defined by a pair of the RB-level and symbol-level bitmaps is repeated.
- A time and frequency domain resource region configured as a control resource set (CORESET) in the BWP, and a resource region corresponding to a time-domain pattern configured by a search space configuration in which the resource region is repeated may be included.

RE Level

The UE may be configured with the following information through higher layer signaling.

- As configuration information (lte-CRS-ToMatchAround) for REs corresponding to an LTE cell-specific reference signal or common reference signal (CRS) pattern, the number of LTE CRS ports (nrofCRS-Ports), an LTE-CRS-vshift(s) value (v-shift), center subcarrier location information (carrierFreqDL) of an LTE carrier relative to a reference frequency point (e.g., reference point A), bandwidth size information (carrierBandwidthDL) of the LTE carrier, subframe configuration information (mbsfn-SubframeConfigList) corresponding to a multicast-broadcast single-frequency network (MBSFN), etc. may be included. Based on such information, the UE may determine the location of the CRS within an NR slot corresponding to an LTE subframe.
- Configuration information for a resource set corresponding to one or more zero power (ZP) CSI-RSs in the BWP may be included.

[LTE CRS Rate Matching Related]

Next, a rate matching process for the above-described LTE CRS will be described in detail. For the coexistence of long term evolution (LTE) and new RAT (NR) (LTE-NR coexistence), the NR provides a function of configuring a cell-specific reference signal (CRS) pattern of LTE for an NR UE. Specifically, the CRS pattern may be provided via RRC signaling including at least one parameter within a ServingCellConfig information element (IE) or a ServingCellConfig-Common IE. Examples of such parameters include lte-CRS-ToMatchAround, lte-CRS-PatternList1-r16, lte-CRS-Pattern-

List2-r16, and crs-RateMatch-PerCORESETPoolIndex-r16.

In Rel-15 NR, a function is provided in which one CRS pattern may be configured per serving cell through the lte-CRS-ToMatchAround parameter. In Rel-16 NR, this function is extended to allow for the configuration of multiple CRS patterns per serving cell. Specifically, one CRS pattern per LTE carrier may be configured for a single-transmission and reception point (single-TRP) configured UE, and two CRS patterns per LTE carrier may be configured for a multi-TRP configured UE. For example, for the single-TRP configured UE, up to three CRS patterns per serving cell may be configured through the lte-CRS-PatternList1-r16 parameter. As another example, for the multi-TRP configured UE, a CRS pattern may be configured for each TRP. That is, a CRS pattern for TRP1 may be configured via the lte-CRS-PatternList1-r16 parameter, and a CRS pattern for TRP2 may be configured via the lte-CRS-PatternList2-r16 parameter. Meanwhile, when two TRPs are configured as described above, whether to apply both the CRS patterns of TRP1 and TRP2 to a specific physical downlink shared channel (PDSCH) or to apply only the CRS pattern for one TRP is determined through crs-RateMatch-PerCORESETPoolIndex-r16 parameter. If the crs-RateMatch-PerCORESETPoolIndex-r16 parameter is set to "enabled", only the CRS pattern of one TRP is applied; otherwise, the CRS patterns of both TRPs are applied.

Table 4 shows the ServingCellConfig IE including the CRS pattern, and Table 5 shows the RateMatchPatternLTE-CRS IE including at least one parameter for the CRS pattern.

[Table 4]

```
ServingCellConfig ::=                SEQUENCE {

    tdd-UL-DL-ConfigurationDedicated    TDD-UL-DL-ConfigDedicated

OPTIONAL,    -- Cond TDD

    initialDownlinkBWP                BWP-DownlinkDedicated

OPTIONAL,    -- Need M

    downlinkBWP-ToReleaseList          SEQUENCE (SIZE (1..maxNrofBWPs)) OF BWP-Id

OPTIONAL,    -- Need N

    downlinkBWP-ToAddModList            SEQUENCE (SIZE (1..maxNrofBWPs)) OF BWP-Downlink

OPTIONAL,    -- Need N

    firstActiveDownlinkBWP-Id         BWP-Id

OPTIONAL,    -- Cond SyncAndCellAdd

    bwp-InactivityTimer               ENUMERATED {ms2, ms3, ms4, ms5, ms6, ms8, ms10, ms20, ms30,

                                                  ms40,ms50, ms60, ms80,ms100, ms200,ms300, ms500,

                                                  ms750, ms1280, ms1920, ms2560, spare10, spare9,
spare8,

                                                  spare7, spare6, spare5, spare4, spare3, spare2,

spare1 }    OPTIONAL,    --Need R

    defaultDownlinkBWP-Id             BWP-Id

OPTIONAL,    -- Need S

    uplinkConfig                      UplinkConfig

OPTIONAL,    -- Need M

    supplementaryUplink               UplinkConfig

OPTIONAL,    -- Need M

    pdcch-ServingCellConfig           SetupRelease { PDCCH-ServingCellConfig }

OPTIONAL,    -- Need M

    pdsch-ServingCellConfig           SetupRelease { PDSCH-ServingCellConfig }

OPTIONAL,    -- Need M

    csi-MeasConfig                    SetupRelease { CSI-MeasConfig }

OPTIONAL,    -- Need M

    sCellDeactivationTimer            ENUMERATED {ms20, ms40, ms80, ms160, ms200, ms240,
```

```
                                        ms320, ms400, ms480, ms520, ms640, ms720,

                                        ms840, ms1280, spare2,spare1}        OPTIONAL,   -

- Cond ServingCellWithoutPUCCH

        crossCarrierSchedulingConfig        CrossCarrierSchedulingConfig

OPTIONAL,    -- Need M

        tag-Id                              TAG-Id,

        dummy                               ENUMERATED {enabled}

OPTIONAL,    -- Need R

        pathlossReferenceLinking            ENUMERATED {spCell, sCell}

OPTIONAL,    -- Cond SCellOnly

        servingCellMO                       MeasObjectId

OPTIONAL,    -- Cond MeasObject

        ...,

        [[

        lte-CRS-ToMatchAround               SetupRelease { RateMatchPatternLTE-CRS }

OPTIONAL,    -- Need M

        rateMatchPatternToAddModList        SEQUENCE (SIZE (1..maxNrofRateMatchPatterns)) OF

RateMatchPattern          OPTIONAL,    -- Need N

        rateMatchPatternToReleaseList       SEQUENCE (SIZE (1..maxNrofRateMatchPatterns)) OF

RateMatchPatternId        OPTIONAL,    -- Need N

        downlinkChannelBW-PerSCS-List       SEQUENCE (SIZE (1..maxSCSs)) OF SCS-SpecificCarrier

OPTIONAL      -- Need S

        ]],

        [[

        supplementaryUplinkRelease          ENUMERATED {true}

OPTIONAL,    -- Need N

        tdd-UL-DL-ConfigurationDedicated-IAB-MT-r16        TDD-UL-DL-ConfigDedicated-IAB-MT-r16

OPTIONAL,    -- Cond TDD_IAB

        dormantBWP-Config-r16               SetupRelease { DormantBWP-Config-r16 }

OPTIONAL,    -- Need M

        ca-SlotOffset-r16                   CHOICE {
```

```
        refSCS15kHz                      INTEGER (-2..2),

        refSCS30KHz                      INTEGER (-5..5),

        refSCS60KHz                      INTEGER (-10..10),

        refSCS120KHz                     INTEGER (-20..20)

    }

OPTIONAL,     -- Cond AsyncCA

    channelAccessConfig-r16          SetupRelease { ChannelAccessConfig-r16 }

OPTIONAL,     -- Need M

    intraCellGuardBandsDL-List-r16   SEQUENCE (SIZE (1..maxSCSs)) OF IntraCellGuardBandsPerSCS-r16

OPTIONAL,     -- Need S

    intraCellGuardBandsUL-List-r16   SEQUENCE (SIZE (1..maxSCSs)) OF IntraCellGuardBandsPerSCS-r16

OPTIONAL,     -- Need S

    csi-RS-ValidationWith-DCI-r16    ENUMERATED {enabled}

OPTIONAL,     -- Need R

    lte-CRS-PatternList1-r16         SetupRelease { LTE-CRS-PatternList-r16 }

OPTIONAL,     -- Need M

    lte-CRS-PatternList2-r16         SetupRelease { LTE-CRS-PatternList-r16 }

OPTIONAL,     -- Need M

    crs-RateMatch-PerCORESETPoolIndex-r16   ENUMERATED {enabled}

OPTIONAL,     -- Need R

    enableTwoDefaultTCI-States-r16       ENUMERATED {enabled}

OPTIONAL,     -- Need R

    enableDefaultTCI-StatePerCoresetPoolIndex-r16 ENUMERATED {enabled}

OPTIONAL,     -- Need R

    enableBeamSwitchTiming-r16           ENUMERATED {true}

OPTIONAL,     -- Need R

    cbg-TxDiffTBsProcessingType1-r16     ENUMERATED {enabled}

OPTIONAL,     -- Need R

    cbg-TxDiffTBsProcessingType2-r16     ENUMERATED {enabled}

OPTIONAL      -- Need R

    ]]
```

[Table 5]

# EP 4 773 540 A1

– *RateMatchPatternLTE-CRS*

The IE *RateMatchPatternLTE-CRS* is used to configure a pattern to rate match around LTE CRS. See TS 38.214 [19], clause 5.1.4.2.

**RateMatchPatternLTE-CRS information element**

```
-- ASN1START

-- TAG-RATEMATCHPATTERNLTE-CRS-START


RateMatchPatternLTE-CRS ::=          SEQUENCE {

    carrierFreqDL                    INTEGER (0..16383),

    carrierBandwidthDL               ENUMERATED {n6, n15, n25, n50, n75, n100, spare2, spare1},

    mbsfn-SubframeConfigList         EUTRA-MBSFN-SubframeConfigList
OPTIONAL,    -- Need M

    nrofCRS-Ports                    ENUMERATED {n1, n2, n4},

    v-Shift                          ENUMERATED {n0, n1, n2, n3, n4, n5}

}


LTE-CRS-PatternList-r16 ::=          SEQUENCE (SIZE (1..maxLTE-CRS-Patterns-r16)) OF

RateMatchPatternLTE-CRS


-- TAG-RATEMATCHPATTERNLTE-CRS-STOP

-- ASN1STOP
```

| **RateMatchPatternLTE-CRS field descriptions** |
|---|
| **carrierBandwidthDL**<br>BW of the LTE carrier in number of PRBs (see TS 38.214 [19], clause 5.1.4.2). |
| **carrierFreqDL**<br>Center of the LTE carrier (see TS 38.214 [19], clause 5.1.4.2). |
| **mbsfn-SubframeConfigList**<br>LTE MBSFN subframe configuration (see TS 38.214 [19], clause 5.1.4.2). |
| **nrofCRS-Ports**<br>Number of LTE CRS antenna port to rate-match around (see TS 38.214 [19], clause 5.1.4.2). |
| **v-Shift**<br>Shifting value v-shift in LTE to rate match around LTE CRS (see TS 38.214 [19], clause 5.1.4.2). |

[PDCCH: DCI Related]

Next, downlink control information (DCI) in the 5G system will be described in detail.

In the 5G system, scheduling information for uplink data (or physical uplink shared channel (PUSCH)) or downlink data (or physical downlink shared channel (PDSCH)) is transmitted from the base station to the UE via the DCI. The UE may monitor a fallback DCI format and a non-fallback DCI format for the PUSCH or the PDSCH. The fallback DCI format may include fixed fields predefined between the base station and the UE, and the non-fallback DCI format may include configurable fields.

The DCI may be transmitted through a physical downlink control channel (PDCCH) after undergoing channel coding and modulation processes. A cyclic redundancy check (CRC) may be attached to a DCI message payload, and the CRC may be scrambled with a radio network temporary identifier (RNTI) corresponding to an identity of the UE. Different RNTIs may be used according to the purpose of the DCI message, for example, a UE-specific data transmission, a power control command, or a random access response. That is, the RNTI is not explicitly transmitted but is included in a CRC calculation process. Upon receiving the DCI message transmitted through the PDCCH, the UE may check the CRC by using an assigned RNTI. If the CRC check is successful, the UE may identify that the corresponding message is transmitted to the UE.

For example, a DCI scheduling a PDSCH for system information (SI) may be scrambled with an SI-RNTI. A DCI scheduling a PDSCH for a random access response (RAR) message may be scrambled with an RA-RNTI. A DCI scheduling a PDSCH for a paging message may be scrambled with a P-RNTI. A DCI notifying of a slot format indicator (SFI) may be scrambled with an SFI-RNTI. A DCI notifying of transmit power control (TPC) may be scrambled with a TPC-RNTI. A DCI scheduling a UE-specific PDSCH or PUSCH may be scrambled with a cell RNTI (C-RNTI).

DCI format 0_0 may be used as a fallback DCI for scheduling the PUSCH, in which case the CRC may be scrambled with a C-RNTI. DCI format 0_0 in which the CRC is scrambled with the C-RNTI may include, for example, information in Table 6 below.

[Table 6]

| |
|---|
| - Identifier for DCI formats - [1] bit |
| - Frequency domain resource assignment - |
| $$\left[ \left\lceil \log_2 \left( N_{\text{RB}}^{\text{UL, BWP}} \left( N_{\text{RB}}^{\text{UL, BWP}} + 1 \right) / 2 \right) \right\rceil \right]$$ |
| bits |
| - Time domain resource assignment - X bits |
| - Frequency hopping flag - 1 bit |
| - Modulation and coding scheme - 5 bits |
| - New data indicator - 1 bit |
| - Redundancy version - 2 bits |
| - HARQ process number - 4 bits |
| - TPC command for scheduled PUSCH - [2] bits |
| - UL/supplementary UL (SUL) indicator - 0 or 1 bit |

DCI format 0_1 may be used as a non-fallback DCI for scheduling the PUSCH, in which case the CRC may be scrambled with a C-RNTI. DCI format 0_1 in which the CRC is scrambled with the C-RNTI may include, for example, information in Table 7 below.

[Table 7]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
| ● For resource allocation type 0, |
| $$\left\lceil N_{\text{RB}}^{\text{UL, BWP}} / P \right\rceil$$ |
| bits |
| ● For resource allocation type 1, |
| $$\left\lceil \log_2 \left( N_{\text{RB}}^{\text{UL, BWP}} \left( N_{\text{RB}}^{\text{UL, BWP}} + 1 \right) / 2 \right) \right\rceil$$ |
| bits |
| - Time domain resource assignment -1, 2, 3, or 4 bits |
| - Virtual resource block (VRB)-to-physical resource block (PRB) mapping - 0 or 1 bit, only for resource allocation type 1 |
| ● 0 bit if only resource allocation type 0 is configured; |
| ● 1 bit otherwise. |
| - Frequency hopping flag - 0 or 1 bit, only for resource allocation type 1 |
| ● 0 bit if only resource allocation type 0 is configured; |
| ● 1 bit otherwise. |
| - Modulation and coding scheme - 5 bits |
| - New data indicator - 1 bit |

(continued)

- Redundancy version - 2 bits

- HARQ process number - 4 bits

- 1st downlink assignment index - 1 or 2 bits

● 1 bit for semi-static HARQ-ACK codebook;

● 2 bits for dynamic HARQ-ACK codebook with single HARQ-ACK codebook.

- 2nd downlink assignment index - 0 or 2 bits

● 2 bits for dynamic HARQ-ACK codebook with two HARQ-ACK sub-codebooks;

● 0 bit otherwise.

- TPC command for scheduled PUSCH - 2 bits

- SRS resource indicator -

$$\left\lceil \log_2 \left( \sum_{k=1}^{L_{max}} \binom{N_{SRS}}{k} \right) \right\rceil$$

or $\left\lceil \log_2 (N_{SRS}) \right\rceil$ bits

●

$$\left\lceil \log_2 \left( \sum_{k=1}^{L_{max}} \binom{N_{SRS}}{k} \right) \right\rceil$$

bits for non-codebook based PUSCH transmission;

● $\left\lceil \log_2 (N_{SRS}) \right\rceil$ bits for codebook based PUSCH transmission.

- Precoding information and number of layers -up to 6 bits

- Antenna ports - up to 5 bits

- SRS request - 2 bits

- CSI request - 0, 1, 2, 3, 4, 5, or 6 bits

- Code block group (CBG) transmission information - 0, 2, 4, 6, or 8 bits

- Phase tracking reference signal (PTRS)-demodulation reference signal (DMRS) association - 0 or 2 bits

- beta_offset indicator - 0 or 2 bits

- DMRS sequence initialization - 0 or 1 bit

DCI format 1_0 may be used as a fallback DCI for scheduling the PDSCH, in which case the CRC may be scrambled with a C-RNTI. DCI format 1_0 in which the CRC is scrambled with the C-RNTI may include, for example, information in Table 8 below.

[Table 8]

- Identifier for DCI formats - [1] bit

- Frequency domain resource assignment -

$$\left\lceil \left\lceil \log_2 (N_{RB}^{DL,BWP} (N_{RB}^{DL,BWP} + 1)/2) \right\rceil \right\rceil$$
bits

- Time domain resource assignment - X bits

- VRB-to-PRB mapping - 1 bit

- Modulation and coding scheme - 5 bits

- New data indicator - 1 bit

- Redundancy version - 2 bits

- HARQ process number - 4 bits

- Downlink assignment index - 2 bits

(continued)

> - TPC command for scheduled PUCCH - [2] bits
> - PUCCH resource indicator - 3 bits
> - PDSCH-to-HARQ feedback timing indicator - [3] bits

DCI format 1_1 may be used as a non-fallback DC for scheduling the PDSCH, in which case the CRC may be scrambled with a C-RNTI. DCI format 1_1 in which the CRC is scrambled with the C-RNTI may include, for example, information in Table 9 below.

[Table 9]

> - Carrier indicator - 0 or 3 bits
> - Identifier for DCI formats - [1] bits
> - Bandwidth part indicator - 0, 1 or 2 bits
> - Frequency domain resource assignment
> ● For resource allocation type 0,
>
> $$\left\lceil N_{RB}^{DL,BWP} / P \right\rceil$$
>
> bits
> ● For resource allocation type 1,
>
> $$\left\lceil \log_2 \left( N_{RB}^{DL,BWP} \left( N_{RB}^{DL,BWP} + 1 \right) / 2 \right) \right\rceil$$
>
> bits
> - Time domain resource assignment -1, 2, 3, or 4 bits
> - VRB-to-PRB mapping - 0 or 1 bit, only for resource allocation type 1
> ● 0 bit if only resource allocation type 0 is configured;
> ● 1 bit otherwise.
> - PRB bundling size indicator - 0 or 1 bit
> - Rate matching indicator - 0, 1, or 2 bits
> - ZP CSI-RS trigger - 0, 1, or 2 bits
> For transport block 1:
> - Modulation and coding scheme - 5 bits
> - New data indicator - 1 bit
> - Redundancy version - 2 bits
> For transport block 2:
> - Modulation and coding scheme - 5 bits
> - New data indicator - 1 bit
> - Redundancy version - 2 bits
> - HARQ process number - 4 bits
> - Downlink assignment index - 0 or 2 or 4 bits
> - TPC command for scheduled PUCCH - 2 bits
> - PUCCH resource indicator - 3 bits
> - PDSCH-to-HARQ _feedback timing indicator - 3 bits
> - Antenna ports - 4, 5 or 6 bits
> - Transmission configuration indication - 0 or 3 bits
> - SRS request - 2 bits
> - CBG transmission information - 0, 2, 4, 6, or 8 bits
> - CBG flushing out information - 0 or 1 bit
> - DMRS sequence initialization - 1 bit

[PDCCH: CORESET, REG, CCE, Search Space]

Hereinafter, a downlink control channel in the 5G communication system will be described in more detail with reference to the drawings.

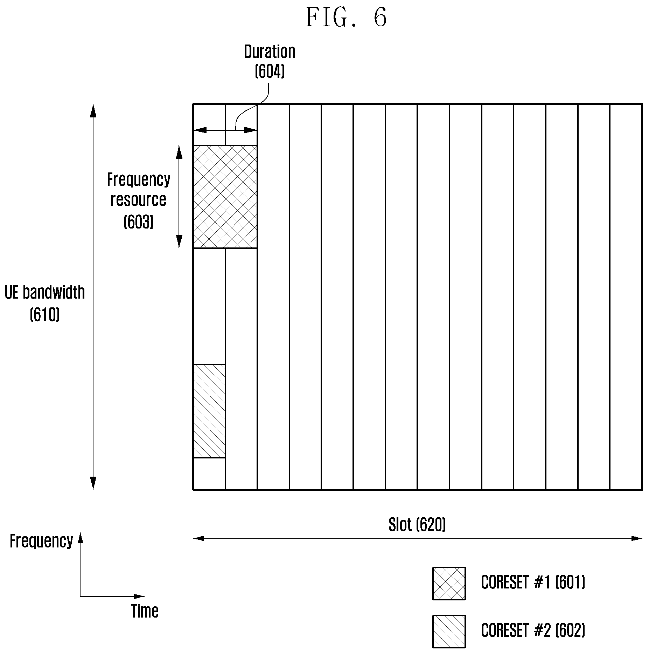

FIG. 6 is a diagram illustrating an example of a control resource set (CORESET) where a downlink control channel is transmitted in the 5G communication system.

FIG. 6 shows an example in which two CORESETs (CORESET#1 601 and CORESET#2 602) are configured within a UE BWP 610 in the frequency domain and within one slot 620 in the time domain. The CORESETs 601 and 602 may be configured for specific frequency resources 603 within the entire UE BWP 610 in the frequency domain. One or multiple OFDM symbols may be configured in the time domain and defined as a CORESET duration 604. In the example shown in FIG. 6, the CORESET#1 601 is configured with the CORESET duration of two symbols, and the CORESET#2 602 is configured with the CORESET duration of one symbol.

The above-described CORESET in 5G may be configured for the UE by the base station via higher layer signaling (e.g., system information (SI), master information block (MIB), radio resource control (RRC) signaling). Configuring the CORESET for the UE refers to providing information such as a CORESET identity, a frequency location of the CORESET, and a symbol length of the CORESET. For example, information in Table 10 below may be included.

[Table 10]

```
ControlResourceSet ::=              SEQUENCE {
        -- Corresponds to L1 parameter 'CORESET-ID'


        controlResourceSetId            ControlResourceSetId,
(CORESET identity)
        frequencyDomainResources        BIT STRING (SIZE (45)),
```

(Frequency domain resource allocation information)

    duration                          INTEGER

(1..maxCoReSetDuration),

(Time domain resource allocation information)

    cce-REG-MappingType         CHOICE {

(CCE-to-REG mapping scheme)

        interleaved                SEQUENCE {

            reg-BundleSize      ENUMERATED {n2, n3, n6},

(REG bundle size)

            precoderGranularity     ENUMERATED {sameAsREG-bundle, allContiguousRBs},

            interleaverSize       ENUMERATED {n2, n3, n6}

(Interleaver size)

            shiftIndex

        INTEGER(0..maxNrofPhysicalResourceBlocks-1)

        OPTIONAL

(Interleaver shift)

---

  },

    nonInterleaved                    NULL

    },

    tci-StatesPDCCH               SEQUENCE(SIZE

(1..maxNrofTCI-StatesPDCCH)) OF TCI-StateId    OPTIONAL,

```
(QCL configuraiton information)

    tci-PresentInDCI                    ENUMERATED {enabled}

    OPTIONAL,

    -- Need S

}
```

In Table 10, tci-StatesPDCCH (simply referred to as transmission configuration indication (TCI) state) configuration information may include information of one or multiple synchronization signal/physical broadcast channel (SS/PBCH) block indexes or channel state information reference signal (CSI-RS) indexes having a QCL relationship with a DMRS transmitted in the corresponding CORESET.

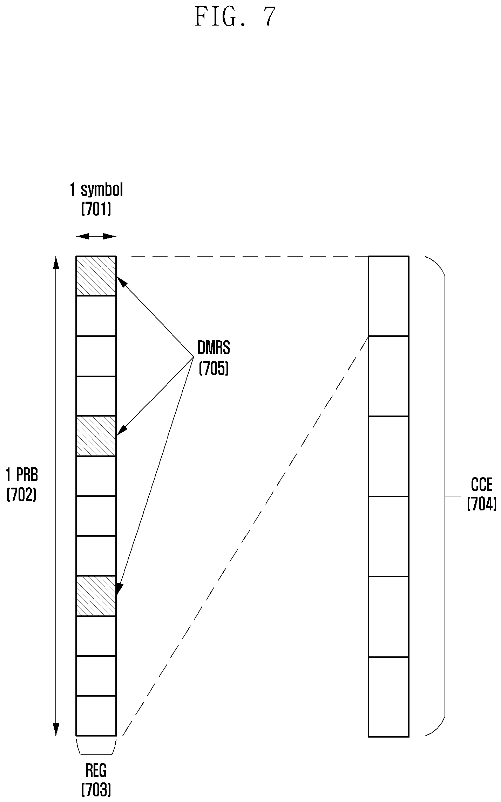

FIG. 7 is a diagram illustrating an example of the basic unit of time and frequency resources constituting a downlink control channel that can be used in 5G. According to FIG. 7, the basic unit of time and frequency resources constituting a control channel may be referred to as a resource element group (REG) 703, which may be defined as one OFDM symbol 701 in the time domain and one physical resource block (PRB) 702, i.e., 12 subcarriers, in the frequency domain. The base station may concatenate the REGs 703 to constitute a downlink control channel allocation unit.

As shown in FIG. 7, in a case where a basic unit to which a downlink control channel is allocated in 5G is referred to as a control channel element (CCE) 704, one CCE 704 may be composed of a plurality of REGs 703. In the example shown in FIG. 7, the REG 703 may include 12 REs, and if one CCE 704 is composed of six REGs 703, one CCE 704 may include 72 REs. When the downlink CORESET is configured, it may be composed of a plurality of CCEs 704, and a specific downlink control channel may be transmitted while being mapped to one or more CCEs 704 according to an aggregation level (AL) in the CORESET. The CCEs 704 in the CORESET are distinguished by numbers, and the numbers of the CCEs 704 may be assigned according to a logical mapping scheme.

The basic unit of the downlink control channel shown in FIG. 7, i.e., the REG 703, may include both REs to which DCI is mapped and a region to which a DMRS 705, which is a reference signal for decoding the DCI, is mapped. As shown in FIG. 7, three DMRSs 705 may be transmitted in one REG 703. The number of CCEs required for transmission of the PDCCH may be 1, 2, 4, 8, or 16 depending on an aggregation level (AL), and different numbers of CCEs may be used to implement link adaptation of the downlink control channel. For example, if AL=L, one downlink control channel may be transmitted through L CCEs. The UE needs to detect a signal in a state where the UE lacks information on the downlink control channel, and a search space, which represents a set of CCEs, is defined for blind decoding. The search space is a set of downlink control channel candidates composed of CCEs that the UE is to attempt to decode at a given AL. Since there are various ALs in which 1, 2, 4, 8, or 16 CCEs form one bundle, the UE may have a plurality of search spaces. A search space set may be defined as a set of search spaces at all configured ALs.

The search space may be classified into a common search space and a UE-specific search space. A certain group of UEs or all the UEs may monitor the common search space of the PDCCH to receive cell-common control information such as dynamic scheduling of system information or a paging message. For example, PDSCH scheduling allocation information for transmission of an SIB including cell operator information, etc., may be received by monitoring the common search space of the PDCCH. In the case of the common search space, since a certain group of UEs or all the UEs need to receive the PDCCH, the common search space may be defined as a set of predefined CCEs. Scheduling allocation information for a UE-specific PDSCH or PUSCH may be received by monitoring the UE-specific search space of the PDCCH. The UE-specific search space may be UE-specifically defined as a function of a UE identity and various system parameters.

In 5G, parameters for the search space of the PDCCH may be configured for the UE by the base station via higher layer signaling (e.g., SIB, MIB, RRC signaling, etc.). For example, the base station may configure the UE with the number of PDCCH candidates at each aggregation level L, the monitoring periodicity for the search space, the monitoring occasions in units of symbols within a slot for the search space, the search space type (common search space or UE-specific search space), a combination of a DCI format and an RNTI to be monitored in the search space, and a CORESET index in which the search space is monitored. For example, the parameters may include information in Table 11 below.

[Table 11]

```
SearchSpace ::=                            SEQUENCE {
-- Identity of the search space. SearchSpaceId = 0 identifies the
SearchSpace      configured      via      PBCH      (MIB)      or
ServingCellConfigCommon.
searchSpaceId                    SearchSpaceId,
(Search space ID)
controlResourceSetId             ControlResourceSetId,
(CORESET ID)
monitoringSlotPeriodicityAndOffset          CHOICE {
(Monitoring slot level periodicity)
        sl1                      NULL,
        sl2                      INTEGER (0..1),
        sl4                      INTEGER (0..3),
        sl5                      INTEGER (0..4),
        sl8                      INTEGER (0..7),
        sl10                     INTEGER (0..9),
        sl16                     INTEGER (0..15),
        sl20                     INTEGER (0..19)
}
```

```
                    OPTIONAL,
duration (Monitoring duration)          INTEGER (2..2559)
monitoringSymbolsWithinSlot                      BIT
STRING (SIZE (14))
(Monitoring system within slot)
nrofCandidates                          SEQUENCE {
(Number of PDCCH candidates per AL)
        aggregationLevel1                    ENUMERATED
{n0, n1, n2, n3, n4, n5, n6, n8},
        aggregationLevel2                    ENUMERATED
{n0, n1, n2, n3, n4, n5, n6, n8},
```

```
        aggregationLevel4                    ENUMERATED
{n0, n1, n2, n3, n4, n5, n6, n8},
        aggregationLevel8                    ENUMERATED
{n0, n1, n2, n3, n4, n5, n6, n8},
        aggregationLevel16                   ENUMERATED
{n0, n1, n2, n3, n4, n5, n6, n8}
},


searchSpaceType                         CHOICE {
(Search space type)
        -- Configures this search space as common search space (CSS)
and DCI formats to monitor.
        common                          SEQUENCE {
    (Common search space)

}
```

```
        ue-Specific                           SEQUENCE {

(UE-specific search space)

                -- Indicates whether the UE monitors in this USS for DCI

formats 0-0 and 1-0 or for formats 0-1 and 1-1.

        formats                               ENUMERATED

{formats0-0-And-1-0, formats0-1-And-1-1},

                ...

}
```

The base station may configure one or more search space sets for the UE according to configuration information. According to some embodiments, the base station may configure the UE with search space set 1 and search space set 2. Specifically, the base station may configure the UE to monitor DCI format A scrambled by X-RNTI in a common search space of search space set 1, and to monitor DCI format B scrambled by Y-RNTI in a UE-specific search space of search space set 2.

According to the configuration information, one or a plurality of search space sets may exist in the common search space or the UE-specific search space. For example, search space set#1 and search space set#2 may be configured as common search spaces, and search space set#3 and search space set#4 may be configured as UE-specific search spaces.

In the common search space, the following combinations of a DCI format and an RNTI may be monitored. However, the disclosure is not limited to the following example.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the following combinations of a DCI format and an RNTI may be monitored. However, the disclosure is not limited to the following example.

- DCI format 0_0/1_0 with CRC scrambled by C-RNTI, CS-RNTI, TC-RNTI

- DCI format 1_0/1_1 with CRC scrambled by C-RNTI, CS-RNTI, TC-RNTI

The specified RNTIs may follow the definitions and usages described below.

Cell RNTI (C-RNTI): Used for UE-specific PDSCH scheduling
Temporary Cell RNTI (TC-RNTI): Used for UE-specific PDSCH scheduling
Configured Scheduling RNTI (CS-RNTI): Used for semi-statically configured UE-specific PDSCH scheduling
Random Access RNTI (RA-RNTI): Used for PDSCH scheduling during random access procedure
Paging RNTI (P-RNTI): Used for scheduling of PDSCH carrying a paging message
System Information RNTI (SI-RNTI): Used for scheduling of PDSCH carrying system information
Interruption RNTI (INT-RNTI): Used for indicating whether PDSCH is punctured
Transmit Power Control for PUSCH RNTI (TPC-PUSCH-RNTI): Used for indicating transmit power control commands for PUSCH
Transmit Power Control for PUCCH RNTI (TPC-PUCCH-RNTI): Used for indicating transmit power control commands for PUCCH
Transmit Power Control for SRS RNTI (TPC-SRS-RNTI): Used for indicating transmit power control commands for SRS

The above-specified DCI formats may follow the definition shown in Table 12 below.

[Table 12]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, a search space of an aggregation level $L$ in a CORESET $p$ and a search space set s may be expressed by Equation 1 below.

[Equation 1]

$$ L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i $$

- $L$: Aggregation level
- $n_{CI}$: Carrier index
- $N_{CCE,p}$: Total number of CCEs existing in the CORESET $p$
- $n_{s,f}^{\mu}$: Slot index
- $M_{s,max}^{(L)}$: Number of PDCCH candidates of aggregation level $L$
- $m_{s,nCI}=0, \cdots, M_{s,max}^{(L)}-1$: PDCCH candidate group index of aggregation level L
- $i=0, \cdots, L-1$
-

$$ Y_{p,n_{s,f}^{\mu}} = \left( A_p \cdot Y_{p,n_{s,f}^{\mu}-1} \right) \bmod D \ , \quad Y_{p,-1} = n_{RNTI} \neq 0 \ , \quad A_p = 39827 \ for \ p \bmod 3 = 0 \ , $$

$$ A_p = 39829 \ for \ p \bmod 3 = 1 , \quad A_p = 39839 \ for \ p \bmod 3 = 2 , \quad D = 65537 $$

- $n_{RNTI}$: UE identifier
- The $Y_{p,n_{s,f}^{\mu}}$ value may correspond to zero in the case of a common search space.

In the case of a UE-specific search space, the $Y_{p,n_{s,f}^{\mu}}$ value may correspond to a value that varies depending on a UE identity (C-RNTI or ID configured by the base station to the UE) and a time index.

In 5G, since a plurality of search space sets may be configured with different parameters (e.g., the parameters in Table 11), a group of search space sets monitored by the UE may vary at each time point. For example, if search space set#1 is configured with a periodicity of X slots and search space set#2 is configured with a periodicity of Y slots, where X and Y are different, the UE may monitor both search space set#1 and search space set#2 in a specific slot, or may monitor only one of search space set#1 and search space set#2 in another specific slot.

[PDSCH/PUSCH: Frequency Resource Allocation Related]

Next, frequency domain resource assignment (FDRA) for a physical downlink shared channel (PDSCH) and a physical uplink shared channel (PUSCH) in NR will be described.

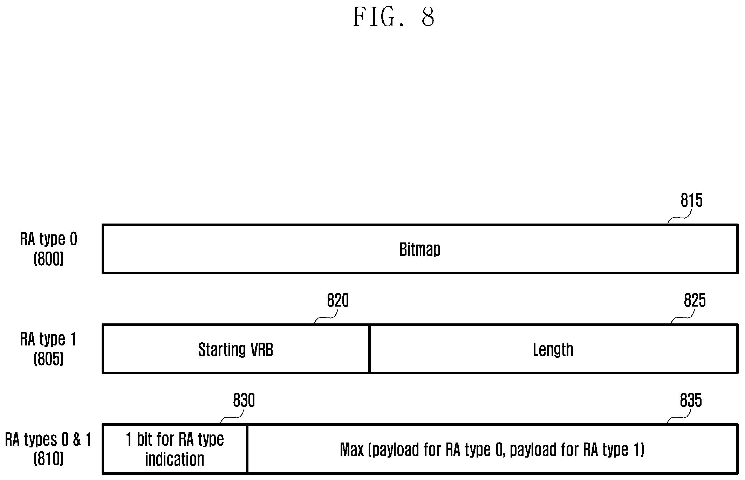

FIG. 8 is a diagram illustrating an example of the frequency domain resource assignment of the PDSCH or PUSCH in a wireless communication system according to an embodiment of the disclosure.

FIG. 8 illustrates three frequency domain resource assignment methods configurable via a higher layer in an NR wireless communication system: FDRA type 0 800, FDRA type 1 805, and dynamic switch 810.

Referring to FIG. 8, in the case 800 where the UE is configured to use only FDRA type 0 via higher layer signaling, certain DCI that schedules a PDSCH or a PUSCH for the UE includes a bitmap composed of $N_{RBG}$ bits. Conditions for this will be described later. In this case, $N_{RBG}$ denotes the number of resource block groups (REGs) determined as shown in Table 13 below according to a size of a BWP allocated by a BWP indicator and a higher layer parameter rbg-Size, and data is transmitted in an RBG indicated by '1' in the bitmap.

[Table 13]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

The size of frequency resources in a BWP may be defined as the number of RBs included in the BWP. More specifically, if the UE is indicated the FDRA type-0 resource assignment, the length of an FDRA field of DCI received by the UE is equal to the number of RBGs ($N_{RBG}$) in the BWP, which is $N_{RBG} = \left\lceil (N_{BWP}^{size} + (N_{BWP}^{start} \bmod P))/P \right\rceil$.

Here, the first RBG in the BWP includes $RBG_0^{size} = P - N_{BWP}^{size} \bmod P$ RBs, and the last RBG in the BWP includes $RBG_{last}^{size} = \left( N_{BWP}^{start} + N_{BWP}^{size} \right) \bmod P$ RBs if $\left( N_{BWP}^{start} + N_{BWP}^{size} \right) \bmod P > 0$, and includes $RBG_{last}^{size} = P$ RBs otherwise. The remaining RBGs in the BWP include P RBs, where P is the number of nominal RBGs determined according to Table 13 above.

In the case 805 where the UE is configured to use only FDRA type 1 via higher layer signaling, DCI that allocates a PDSCH or a PUSCH for the UE includes frequency domain resource assignment (FDRA) information composed of $\left\lceil \log_2(N_{RB}^{BWP} * (N_{RB}^{BWP} + 1)/2 \right\rceil$ bits. Here, $N_{RB}^{BWP}$ is the number of RBs included in the BWP. Through this, the base station can configure a starting VRB 820 and a length 825 of frequency domain resources allocated continuously therefrom.

In the case 810 where the UE is configured to use both FDRA type-0 resource allocation and FDRA type-1 resource allocation via higher layer signaling, certain DCI that allocates a PDSCH/PUSCH for the UE includes FDRA information composed of bits of a larger value 835 between a payload 815 for configuring FDRA type-0 resource allocation and payloads 820 and 825 for configuring FDRA type-1 resource allocation. Conditions for this will be described later. In this case, one bit may be added to the most significant bit (MSB) of the FDRA information in the DCI. If this bit has a value of '0', it may indicate that FDRA type-0 resource allocation is used, and if this bit has a value of '1', it may indicate that FDRA type-1 resource allocation is used.

If the UE is configured with the FDRA type-2 resource allocation method via higher layer signaling, the UE can be indicated the FDRA type-2 resource allocation method from the base station according to the following method.

If the UE is not configured with higher layer signaling, vrb-ToPRB-Interleaver, the UE may connect a resource allocated to a VRB to a PRB without interleaving. If the UE is configured with higher layer signaling, vrb-ToPRB-Interleaver, the higher layer signaling has a value of 2 or 4, and the value may be a unit of a plurality of RBs for performing interleaving. That is, RB bundles, each consisting of 2 or 4 RBs, may be used for the interleaving.

If the UE is configured with the i-th BWP starting from $N_{BWP,i}^{start}$ position and consisting of $N_{BWP,i}^{size}$ RBs in length, and the vrb-ToPRB-Interleaver is configured as $L_i$, the UE can divide the i-th BWP into

$$N_{bundle} = \left\lceil \left( N_{BWP,i}^{size} + \left( N_{BWP,i}^{start} \bmod L_i \right) \right) / L_i \right\rceil$$ RB bundles, each of which may consist of $L_i$ RBs.

- In the i-th BWP, the first RB bundle may consist of $L_i - \left( N_{BWP,i}^{size} \bmod L_i \right)$ RBs.

- In the i-th BWP, the last RB bundle may consist of $\left( N_{BWP,i}^{start} + N_{BWP,i}^{size} \right) \bmod L_i$ RBs if the $\left( N_{BWP,i}^{start} + N_{BWP,i}^{size} \right) \bmod L_i$ value is greater than 0, and otherwise, it may consist of $L_i$ RBs.

- In the i-th BWP, the remaining RB bundles may consist of $L_i$ RBs.

In this case, VRBs may be connected to PRBs according to the following method.

- The last VRB bundle may be connected to the last PRB bundle.
- The j-th (i - 0, 1, ···, $N_{bundle}$ - 2) VRB bundle may be connected to the *f(j)* -th PRB bundle, and *f(j)* may be expressed as in Equation 2 below.

[Equation 2]

$$f(j) = rC + c$$

$$j = cR + r$$

$$r = 0, 1, ..., R - 1$$

$$c = 0, 1, ..., C - 1$$

$$R = 2$$

$$C = \lfloor N_{bundle}/R \rfloor$$

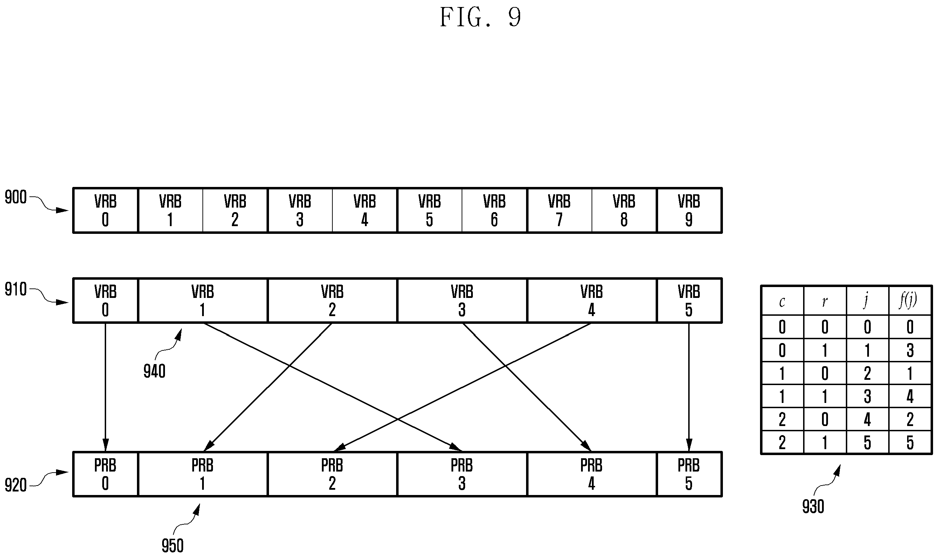

FIG. 9 is a diagram illustrating a VRB-PRB interleaving scheme of a PDSCH in FDRA type-1 resource allocation according to an embodiment of the disclosure. FIG. 9 shows a case 910 where each of the first and last VRB bundles consists of one VRB within a BWP 900 composed of 10 RBs. Accordingly, the number of VRB bundles $N_{bundle}$ may be 6, and calculated as $C = \lfloor N_{bundle}/R \rfloor = 3$ by Equation 2 above. Since the j-th VRB bundle may be connected to the f(j)-th PRB bundle by Equation 2, the connection from a VRB bundle to a PRB bundle may be performed as denoted by 920 through a result 930 calculated by Equation 2. For example, VRB bundle 1 940 may be connected to PRB bundle 3 950.

The UE may be indicated RB allocation information from the base station, which includes a set of M interlace indexes.

The interlace indexes $m \in \{0,1, ..., M$-1$\}$ may be composed of common RBs $\{m, M + m, 2M + m, 3M + m, ...\}$, and M may be defined as shown in Table 20.

[Table 20]

| μ | M |
|---|---|
| 0 | 10 |
| 1 | 5 |

The relationship between RB $n_{\text{IRB},m}^{\mu} \in \{0,1,\dots\}$, which is in interlace m and bandwidth part i, and common RB $n_{\text{CRB}}^{\mu}$ may be defined as follows.

■

$$n_{\text{CRB}}^{\mu} = M n_{\text{IRB},m}^{\mu} + N_{\text{BWP},i}^{\text{start},\mu} + \left( \left( m - N_{\text{BWP},i}^{\text{start},\mu} \right) \bmod M \right)$$

■ where $N_{\text{BWP},i}^{\text{start},\mu}$ is the common resource block where bandwidth part starts relative to common resource block 0. u is subcairre spacing index

When the subcarrier spacing is 15 kHz (u=0), RB allocation information for an interlace set with indexes m0 + 1 may be notified from the base station to the UE. In addition, the resource allocation field may be composed of a resource indicator value (RIV). When the resource indicator value is $0 \le RIV < M(M+1)/2$, $l = 0,1, \cdots, L$ - 1, it may be composed of a start interlace m0 and the number of consecutive interlaces $L$ ($L \ge 1$), and its value is as follows.

$$\text{if } (L-1) \le \lfloor M/2 \rfloor \text{ then}$$

$$RIV = M(L-1) + m_0$$

$$\text{else}$$

$$RIV = M(M - L + 1) + (M - 1 - m_0)$$

When the resource indicator value is $RIV \ge M(M+1)/2$, the resource indicator value is composed of the start interlace index m0 and l values and may be composed as shown in Table 15.

[Table 15]

| *RIV - M(M + 1)/2* | m0 | *l* |
|---|---|---|
| 0 | 0 | {0, 5} |
| 1 | 0 | {0, 1, 5, 6} |
| 2 | 1 | {0, 5} |
| 3 | 1 | {0, 1, 2, 3, 5, 6, 7, 8} |
| 4 | 2 | {0, 5} |
| 5 | 2 | {0, 1, 2, 5, 6, 7} |
| 6 | 3 | (0, 5) |
| 7 | 4 | {0, 5} |

When the subcarrier spacing is 30 kHz (u=1), RB allocation information may be notified from the base station to the UE in the form of a bitmap indicating interlaces allocated to the UE. The bitmap size is M, and one bit in the bitmap corresponds to interlace. The interlace bitmap may be mapped in order from MSB to LSB for interlace indexes 0 to M-1.

Additionally, for 15 kHz and 30 kHz, the least significant bit (LSB) $Y = \left\lceil log2 \frac{N_{RB-set}^{BWP}(N_{RB-set}^{BWP}+1)}{2} \right\rceil$ of the FDRA field may indicate a contiguous RB set of a PUSCH scheduled in DCI format 0_1. The Y bit may be composed of a resource indication value (RIVRBset). In $0 \le RIV_{RBset} < N_{RB-set}^{BWP}(N_{RB-set}^{BWP} + 1)/2$, $l = 0,1, \cdots L_{RBset}$ - 1, the RIVRBset value may be determined by the starting RB set (*RBset*START) and the number of contiguous RB sets (*L_RBset* (*L_RBset* ≥ 1)). The RIVRBset value may be defined as follows.

if $(L_{RBset} - 1) \le \lfloor N_{RB-set}^{BWP}/2 \rfloor$ then

$$RIV_{RBset} = N_{RB-set}^{BWP}(L_{RBset} - 1) + RBset_{\text{START}}$$

else

$$RIV_{RBset} = N_{RB-set}^{BWP}(N_{RB-set}^{BWP} - L_{RBset} + 1) + (N_{RB-set}^{BWP} - 1 - RBset_{\text{START}})$$

$N_{RB-set}^{BWP}$ refers to the number of RB sets included in a bandwidth part, and may be determined by the number of guard gaps (or bands) within a carrier configured via higher signaling (or preconfigured).

[PDSCH/PUSCH: Time Domain Resource Allocation Related]

Hereinafter, a method for time domain resource allocation for a data channel in a next-generation mobile communication system (a 5G or NR system) will be described.

The base station may configure the UE with a table for time domain resource allocation information for a downlink data channel (PDSCH: physical downlink shared channel) and an uplink data channel (PUSCH: physical uplink shared channel) via higher layer signaling (e.g., RRC signaling). For the PDSCH, a table composed of up to maxNrofDL-Allocations=16 entries may be configured, and for the PUSCH, a table composed of up to maxNrofUL-Allocations=16 entries may be configured. In an embodiment, the time domain resource allocation information may include PDCCH-to-PDSCH slot timing (corresponding to a time interval in units of slots between a time when a PDCCH is received and a time when a PDSCH scheduled by the PDCCH is transmitted, and denoted by K0), PDCCH-to-PUSCH slot timing (corresponding to a time interval in units of slots between a time when a PDCCH is received and a time when a PUSCH scheduled by the PDCCH is transmitted, and denoted by K2), information on a start symbol position and a length of the PDSCH or PUSCH scheduled within a slot, a mapping type of the PDSCH or PUSCH, and the like. For example, information such as Table 16 or Table 17 below may be transmitted from the base station to the UE.

[Table 16]

| ***PDSCH-TimeDomainResourceAllocationList information element*** |
| --- |
| PDSCH-TimeDomain ResourceAllocationList::=　　SEQUENCE (SIZE(1..maxNrofDL-Allocations))　　　　OF　　　　PDSCH-TimeDomain ResourceAllocation |
| PDSCH-TimeDomain ResourceAllocation ::=　　SEQUENCE { <br>　K0　　　　　　　　　　　　　　　　INTEGER(0..32) |

```
OPTIONAL,        -- Need S

      (PDCCH-to-PDSCH timing, slot unit)

mapping Type                              ENUMERATED {typeA,

typeB},

      (PDSCH mapping type)

startSymbolAndLength                      INTEGER (0..127)

      (Start symbol and length of PDSCH)

}
```

[Table 17]

---

***PUSCH-TimeDomainResourceAllocation information element***

PUSCH-TimeDomain ResourceAllocationList ::=   SEQUENCE
(SIZE(1..maxNrofUL-Allocations))                OF            PUSCH-
TimeDomainResourceAllocation


PUSCH-TimeDomain ResourceAllocation ::=   SEQUENCE {
      k2                                       INTEGER(0..32)

OPTIONAL,       -- Need S

      (PDCCH-to-PUSCH timing, slot unit)

mapping  Type                                      ENUMERATED
{typeA, typeB),

      (PUSCH mapping type)

startSymbolAndLength

      (Start symbol and length of PUSCH)       INTEGER (0..127)

}

---

The base station may notify one of entries in the above-described table for the time-domain resource allocation information to the UE via L1 signaling (e.g., DCI) (e.g., it may be indicated by a 'time domain resource allocation' field in DCI). Based on the DCI received from the base station, the UE may acquire time-domain resource allocation information for PDSCH or PUSCH.

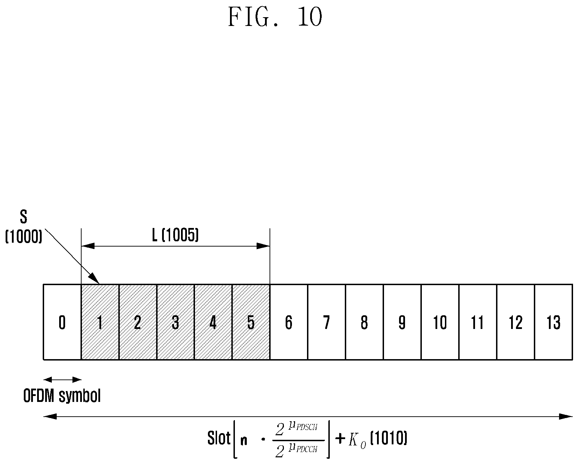

FIG. 10 is a diagram illustrating an example of time domain resource allocation of a PDSCH in a wireless communication system according to an embodiment of the disclosure.

Referring to FIG. 10, the base station may indicate a time domain position of a PDSCH resource based on subcarrier spacings (SCSs) ($\mu$PDSCH, $\mu$PDCCH) of a data channel and a control channel and a scheduling offset (K0) value, which are configured via higher layer signaling, and a start position 1000 and a length 1005 of OFDM symbols within one slot, which are dynamically indicated via DCI.

Hereinafter, embodiments of the disclosure will be described in detail with reference to the accompanying drawings. The disclosure is applicable to FDD, TDD, and/or XDD (and/or SBFD or full duplex) systems. Hereinafter, in the disclosure, higher signaling (or higher layer signaling) refers to a signal transmission method in which a signal is transmitted from a base station to a UE using a downlink data channel of a physical layer, or from a UE to a base station using an uplink data channel of a physical layer, and may be referred to as RRC signaling, PDCP signaling, or a medium access control (MAC) control element (MAC CE).

Hereinafter, a base station refers to an entity performing resource allocation of a terminal, and may be at least one of a gNode B (gNB), an eNode B (eNB), a Node B, a base station (BS), a radio access unit, a base station controller, or a node on a network. A terminal may include a user equipment (UE), a mobile station (MS), a cellular phone, a smart phone, a computer, or a multimedia system capable of performing a communication function. Hereinafter, embodiments of the disclosure will be described using a 5G system as an example, but the embodiments may also be applied to other communication systems having a similar technical background or channel type, such as an LTE or LTE-A mobile communication and mobile communication technologies developed after 5G. Accordingly, the embodiments of the disclosure may be applied to other communication systems through some modifications without significantly departing from the scope of the disclosure as will be apparent to a person skilled in the art. The contents of the disclosure can be applied to FDD, TDD, and XDD (or SBFD or full duplex) systems.

In the description of the disclosure, a detailed description of known functions or components will be omitted when it may make the subject matter of the disclosure unnecessarily unclear. The terms which will be described below are terms defined in consideration of the functions in the disclosure, and may be varied according to users, intentions of operators, or customs. Therefore, the definitions of the terms should be made based on the contents throughout the description.

In the description of the disclosure, higher layer signaling may refer to signaling corresponding to at least one or a combination of two or more of the following signaling methods.

- MIB (Master Information Block)
- SIB (System Information Block) or SIB X (X=1, 2, ...)
- RRC (Radio Resource Control)
- MAC (Medium Access Control) CE (Control Element)

In addition, L1 signaling may refer to signaling corresponding to at least one or a combination of two or more of signaling methods using the following physical layer channels or signaling.

- PDCCH (Physical Downlink Control Channel)
- DCI (Downlink Control Information)
- UE-specific DCI
- Group common DCI
- Common DCI
- Scheduling DCI (e.g., DCI used for the purpose of scheduling downlink or uplink data)
- Non-scheduling DCI (e.g., DCI not used for the purpose of scheduling downlink or uplink data)
- PUCCH (Physical Uplink Control Channel)
- UCI (Uplink Control Information)

The term "slot" used in the disclosure is a general term that may refer to a specific time unit corresponding to a transmit time interval (TTI), and specifically may refer to a slot used in a 5G NR system, or refer to a slot or a subframe used in a 4G LTE system, or a time resource unit used in a 6G system.

In the following description of the disclosure, rate matching is described as an example; however, this is merely an example of vacating specific resources to prevent resources from being overlapped when different RATs use the same frequency band, and the disclosure is not limited to rate matching. For example, puncturing may be used.

Unless specifically stated otherwise, in the description of the disclosure, indicating rate matching, indicating a rate matching pattern, and configuring rate matching may be interpreted as having the same meaning.

For convenience, in the following description of the disclosure, a case where 5G and LTE overlap/conflict with each other is described as an example of cases where a first radio access technology (RAT) and a second RAT overlap/conflict. However, the disclosure is not limited thereto. For example, the disclosure may also be applied to cases where 6G and 5G overlap/conflict, 6G and LTE overlap/conflict, a post-6G RAT and a pre-6G RAT overlap/conflict, and the like, without being limited thereto. In the following description of the disclosure, the term "candidate LTE PUCCH resources" may be substituted with "candidate PUCCH resources".

While the disclosure describes the above examples through a plurality of embodiments, these embodiments are not mutually exclusive, and one or more embodiments may be applied simultaneously or in combination.

In a 6G system, spectrum sharing technology may be significant. For example, a technology in which multiple RATs (multi-RAT) coexist in the same frequency band, such as dynamic spectrum sharing (DSS) or multi-radio access technology (RAT) spectrum sharing (MRSS), may be used, but the disclosure is not limited thereto. Reasons why spectrum sharing technology is important in 6G systems are as follows.

1) Spectrum scarcity for 6G

New frequency bands for a 6G system may be operated. In addition, the 6G system may also utilize existing frequency bands. For example, the 6G system may provide wide-area coverage by efficiently utilizing the existing spectrum such as a low-band spectrum. Since the existing frequency bands are already being used by existing users (e.g., LTE/5G communication systems), spectrum sharing technologies such as DSS and MRSS may be required for the 6G system to effectively utilize the existing frequency bands.

2) Enabling Standard Alone (SA) Architecture

In the early stages of 5G, as the radio access network (RAN) was operated in a non-standard alone (NSA) form, problems occurred such as limited use of 5G functions, complex development, and increased operational overhead. Accordingly, 6G systems are expected to operate in an SA architecture from the beginning, and spectrum sharing technologies such as DSS and MRSS may be required for the SA architecture. For example, spectrum sharing technology may be a key technology for supporting smooth network migration and multi-RAT connectivity.

To apply spectrum sharing technologies such as DSS and MRSS, resource conflicts and/or spectrum collisions due to resource usage should not occur between RATs (hereinafter, inter-RAT). Rate-matching or puncturing functions may be supported to prevent such resource conflicts and/or spectrum collisions.

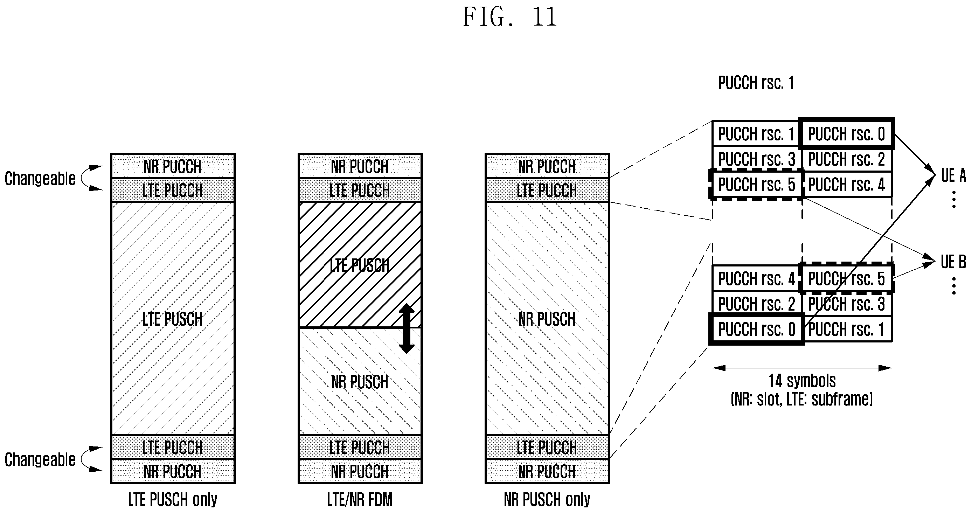

FIG. 11 is a diagram illustrating an example of an LTE/NR DSS scenario to which an embodiment of the disclosure is applicable. FIG. 11 illustrates an example of DSS applied between LTE and NR, but the disclosure is not limited thereto.

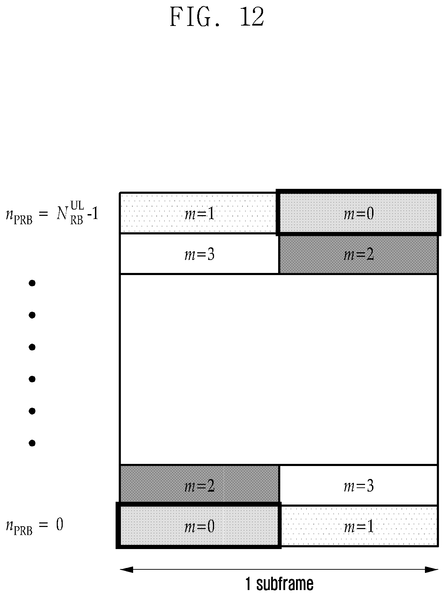

FIG. 12 is a diagram illustrating an example of LTE PUCCH allocation to which an embodiment of the disclosure is applicable.

Referring to FIG. 11, LTE/NR PUCCHs may be positioned at both ends of a bandwidth, and the positions of the LTE PUCCH and the NR PUCCH may be interchanged with each other. In a portion of the bandwidth other than the portions where the LTE PUCCH and the NR PUCCH are mapped/allocated, an LTE PUSCH (LTE PUSCH only), an NR PUSCH (NR PUSCH only), and/or an LTE PUSCH and an NR PUSCH (LTE/NR PUSCH FDM) may be mapped/allocated. That is, spectrum sharing may be applied between LTE and NR in a flexible pattern. Such a pattern may be LTE only, NR only, or LTE/NR FDM, and may have an RB-level granularity.

In the case of an LTE PUCCH, it may be mapped/allocated to a control region within a subframe. An RB pair within the subframe may be allocated to the LTE PUCCH for a single UE. The RBs included in the RB pair may occupy different subcarriers in each of two slots within the subframe. That is, the RB pair allocated to the LTE PUCCH may be frequency-hopped at a slot boundary.

In the case of an NR PUCCH, it may be mapped/allocated to a control region within a slot. For example, in the case of a long PUCCH, since a control channel with a long transmission interval is used for the purpose of increasing cell coverage, it may be transmitted through a discrete Fourier transform-spread-OFDM (DFT-S-OFDM) scheme, which is single-carrier transmission, rather than OFDM scheme. Accordingly, the PUCCH should be transmitted using only contiguous subcarriers, and frequency hopping may be configured to achieve a frequency diversity effect. That is, when frequency hopping is applied (e.g., when frequency hopping is enabled by higher layer signaling), the UE may configure an uplink control channel with a long transmission interval based on resources at frequency positions separated from each other. When frequency hopping is not applied (e.g., when frequency hopping is disabled by higher layer signaling), the long PUCCH may be transmitted over the transmission symbols of the long PUCCH at a frequency position determined by transmission start PRB information and PRB number information configured via higher layer signaling.

For example, in the case of a short PUCCH, it may be transmitted in both a downlink-centric slot and an uplink-centric slot, and is generally transmitted in the last symbol of the slot or in OFDM symbols at a rear part thereof (e.g., the last OFDM symbol, the penultimate OFDM symbol, or the last two OFDM symbols). It is also possible for the short PUCCH to be transmitted at an arbitrary position within the slot. The short PUCCH may be transmitted using one or two OFDM symbols. Radio resources for the short PUCCH are allocated in units of PRBs in the frequency domain, where the allocated PRBs may include a single PRB, a plurality of consecutive PRBs, or a plurality of non-contiguous PRBs spaced apart from each other in the frequency band. Additionally, the allocated PRBs should be included within a band that is equal to or smaller than a frequency band supported by the UE.

Referring to FIGS. 11 and 12, in the case of LTE PUCCH resources, PUCCH resources (0, 1, 2, 3, 4, 5, ...) may be mapped/allocated within a subframe including 14 OFDM symbols, where an RB pair corresponding to a PUCCH resource having the same index may be frequency-hopped at a slot boundary. For example, PUCCH resource 0 may be allocated to UE A, and PUCCH resource 5 may be allocated to UE B. An index (e.g., a physical resource block number) of a PRB forming the PUCCH may be denoted as $N_{RB}^{UL}-1$, and $N_{RB}^{UL}$ may denote an uplink bandwidth configuration or the number of UL RBs included in the uplink bandwidth.

In the case of NR PUCCH resources, PUCCH resources (0, 1, 2, 3, 4, 5, ...) may be mapped/allocated within a slot including 14 OFDM symbols, where frequency hopping may be applied at a slot boundary for RBs corresponding to a PUCCH resource having the same index. For example, PUCCH resource 0 may be allocated to UE A, and PUCCH resource 5 may be allocated to UE B. The NR PUCCH may be, but is not limited to, a long PUCCH.

The characteristics of an LTE PUCCH can be summarized as follows. When frequency hopping is applied to an NR PUCCH (e.g., when IntraSlotFrequencyHopping is enabled), the NR PUCCH may also have characteristics corresponding to the following. That is, it may have a pattern corresponding to the following LTE PUCCH pattern.

1) A PUCCH uses one RB in each of two slots within a subframe.
2) A position of the PUCCH changes at a slot boundary according to a change in slot number.

When IntraSlotFrequencyHopping is enabled, since the NR PUCCH has characteristics corresponding to those of the LTE PUCCH, the LTE PUCCH may be substituted with the NR PUCCH with IntraSlotFrequencyHopping enabled, unless otherwise specified in the description of an embodiment of the disclosure. For the NR PUCCH, in comparison with the LTE PUCCH, a subframe may be replaced with a slot, and a slot may be replaced with a half-slot. Unless otherwise specified in the description of an embodiment of the disclosure, PUCCH resources may be construed as, but are not limited to, LTE PUCCH resources or NR PUCCH resources for which IntraSlotFrequencyHopping is enabled.

PUCCH resources may be classified into periodic transmission and on-demand transmission. For example, periodic PUCCH resources may be used for a scheduling request (SR) or CSI reporting. For example, on-demand PUCCH resources may be used for transmitting uplink control information (UCI) for hybrid automatic repeat request (HARQ) feedback. For example, each PUCCH resource may be reserved for a specific UE through RRC (re)configuration.

According to an embodiment of the disclosure, a method for indicating a rate matching pattern may be provided. For example, a signaling method for rate matching may vary depending on an LTE PUCCH format. Table 18 summarizes signaling methods for rate matching suitable for each PUCCH format. However, the disclosure is not limited thereto, and signaling methods for other rate matching methods may be applied to each PUCCH format.

[Table 18]

| Classification | PUCCH format | UCI information | When rate matching is applied to corresponding PUCCH resource |
|---|---|---|---|
| Periodic | Format 1 | No ack/nack, SR only | Every time a UE repeats IDLE ↔ CONNECTED, an SR/CSI report related rate matching pattern needs to be updated |
| | Format 2 | CSI only | → an indication by MAC CE is suitable |
| On-demand | Format 1a/1b | MIMO ack/-nack | For a PUCCH (for HARQ feedback) occurring in units of a subframe (= NR: slot), a rate matching pattern needs to be configured → an indication by DCI is suitable |

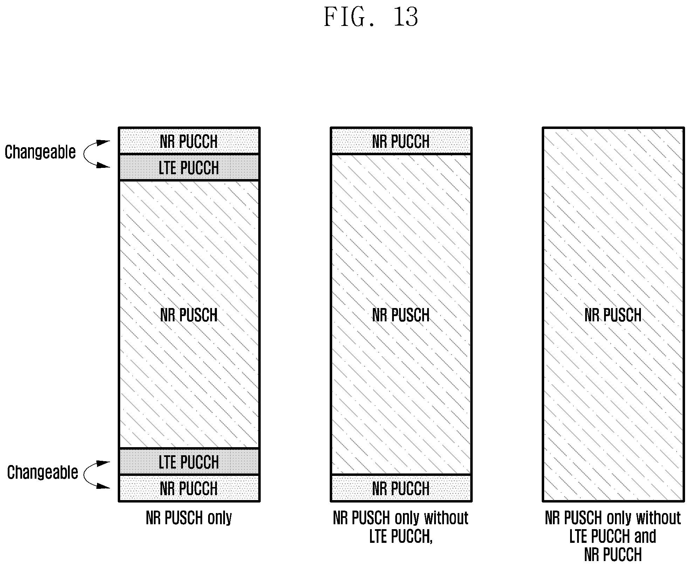

FIG. 13 is a diagram illustrating an example of an LTE/NR DSS scenario to which an embodiment of the disclosure is applicable.

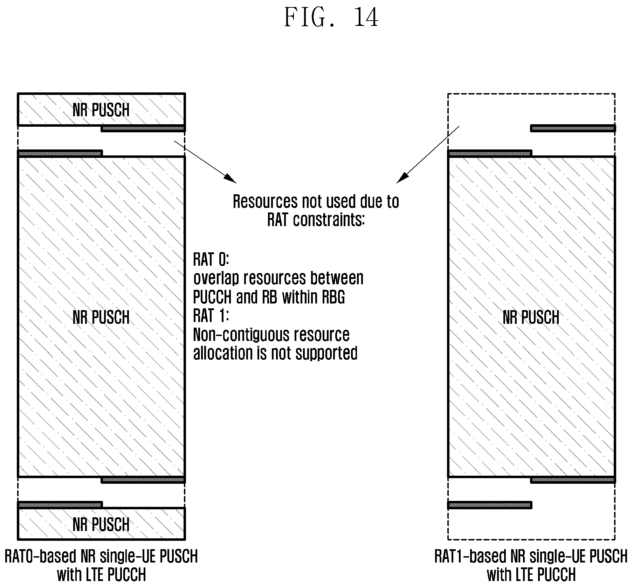

FIG. 14 is a diagram illustrating an example of an LTE/NR DSS scenario to which an embodiment of the disclosure is applicable.

Referring to FIG. 13, an NR PUSCH region that can be allocated from the perspective of a single UE is illustrated. When both an LTE PUCCH and an NR PUCCH are allocated within a bandwidth, the NR PUSCH may be allocated to a region excluding the regions where the LTE PUCCH and the NR PUCCH are allocated. If the LTE PUCCH is not allocated but the NR PUCCH is allocated within the bandwidth, the region corresponding to the LTE PUCCH may also be used for the NR PUSCH. If neither the LTE PUCCH nor the NR PUCCH is allocated within the bandwidth, all resources within the bandwidth may be used for the NR PUSCH. In the case of FIG. 13, resources not used for the NR PUSCH are used for a PUCCH of another RAT or an NR PUCCH, and if a certain PUCCH is not allocated, the region corresponding to the unallocated PUCCH may be used for the NR PUSCH, thereby preventing resource waste. However, in the example of FIG. 14, a problem of resource waste occurs.

As described above, the frequency resource allocation methods for the NR PUSCH may be classified into a bitmap-based (resource allocation type (RAT) 0) method and an RIV-based (RAT 1) method. Due to the constraints of these NR PUSCH frequency resource allocation methods, in the example of FIG. 13, wasted resources that cannot be used for the NR PUSCH or for other purposes may occur.

Specifically, in the case of RAT 0, a single bit in a bitmap may represent consecutive RBs. That is, RAT 0 may indicate frequency resource allocation in units of RBG. Therefore, if the LTE PUCCH and the NR PUSCH overlap within an RBG, the remaining resources (remaining RBs) in the RBG that do not overlap cannot be indicated by RAT 0. Consequently, resources cannot be allocated in units of RBG, which is the resource allocation granularity of RAT 0, resulting in resource waste.

In the case of RAT 1, frequency resource allocation may be indicated using a starting RB and the number of consecutive RBs from the starting RB. That is, RAT 1 does not support non-contiguous RB allocation. Therefore, if the LTE PUCCH and the NR PUSCH overlap within the bandwidth, all RBs following the overlapping RB in the frequency domain cannot be indicated by RAT 1.

Specifically, in FIG. 14, assuming a bandwidth of 20 MHz, the number of RBs in the bandwidth for NR is 106. When configuration 1 is used in RAT 0, the RBG size is 8. Although two RBs are allocated for LTE PUCCH purposes, 16 RBs corresponding to two RBGs may not be allocated for NR PUSCH purposes. Since RAT 1 only allows for contiguous RB allocation, an even larger amount of resources may be wasted without being allocated to the NR PUSCH compared to RAT 0.

The legacy 5G system supports a rate matching function to avoid transmission in resource locations overlapping with other RATs and to perform transmission only in the remaining resource locations. However, the legacy 5G system supports only a limited number of patterns and types. Specifically, the legacy 5G system does not support rate matching for a single or a plurality of non-contiguous LTE PUCCH resources. In addition, the legacy 5G system does not support a rate matching function at the PUCCH resource level that varies for each slot. This makes it difficult to indicate rate matching for dynamically used LTE PUCCH resources via DCI (e.g., a UL grant DCI). Furthermore, if rate matching is performed based on the methods supported by the legacy 5G system, the number of states required to represent various LTE PUCCH resource configurations increases exponentially, which can lead to an excessively large signaling overhead for indicating the rate matching.

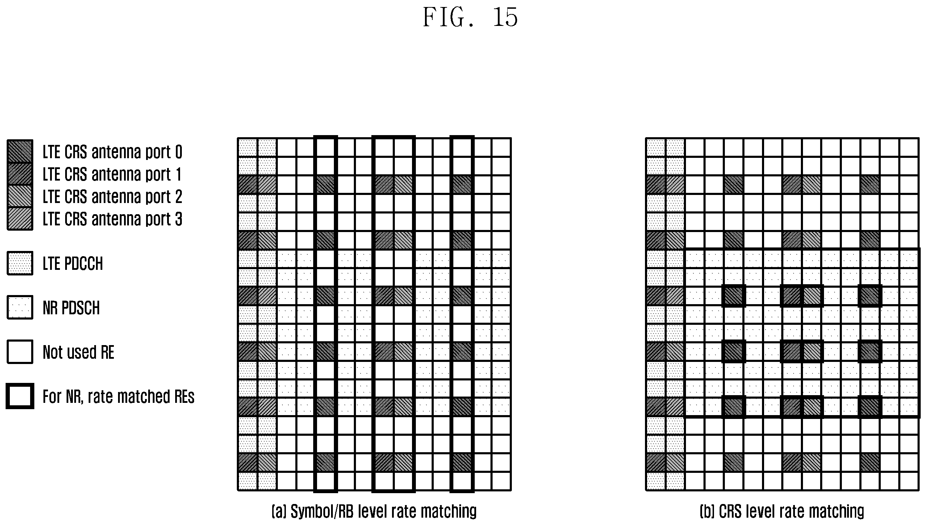

FIG. 15 illustrates an example of a rate matching method in a communication system to which an embodiment of the disclosure is applicable. For more specific details on the rate matching method of FIG. 15, refer to the above description of rate matching.

Referring to (a) of FIG. 15, rate matching may be performed at the symbol/RB level. For example, if rate matching is performed for symbols #5, #8, #9, and #11, it implies that all RBs within each of these symbols #5, #8, #9, and #11 are rate-matched. Consequently, the method of (a) of FIG. 15 leads to wasted RBs and may not be suitable for PUCCH-level rate matching. For example, it may be unsuitable for rate matching of a PUCCH to which intra-slot hopping is applied (intra-slot hopping pattern rate matching). Furthermore, the method of (a) of FIG. 15 supports a maximum of only four rate matching patterns, making it inadequate for rate matching on dynamically indicated PUCCH resources.

Referring to (b) of FIG. 15, rate matching may be performed for REs to which LTE CRSs are mapped. That is, since rate matching is performed based on a CRS pattern, the method of (b) of FIG. 15 cannot be applied to PUCCH-level rate matching.

According to an embodiment of the disclosure, an inter-RAT PUCCH resource-level rate matching method may be supported. According to an embodiment of the disclosure, a method for dynamically indicating a rate matching pattern for PUCCH resources used by another RAT in a UL spectrum sharing situation is proposed.

According to an embodiment of the disclosure, a rate matching pattern indication may be included in DCI for a UL grant. According to an embodiment of the disclosure, resource efficiency can be maximized by minimizing the amount of unused resources caused by constraints of resource allocation schemes (e.g., RGB-based allocation in RAT 0 or contiguous RB-only allocation in RAT 1) in the UL spectrum sharing situation.

The rate matching method according to an embodiment of the disclosure may be summarized as shown in Table 19.

[Table 19]

| | Granularity | Rate match pattern |
|---|---|---|
| PUCCH resource level-rate match | Symbol, RB | Depends on PUCCH resource pattern |

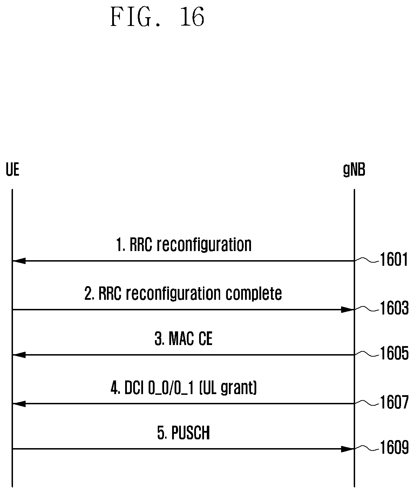

FIG. 16 is a diagram illustrating an example of a signaling procedure between a UE and a base station according to an embodiment of the disclosure. The flowchart in FIG. 16 illustrates an exemplary method that can be implemented in accordance with the principles of the disclosure, and various modifications may be made to the method depicted in the flowchart. For example, although illustrated as a series of steps, various steps in the flowchart may overlap, occur in parallel, occur in a different order, or occur multiple times. In other examples, certain steps may be omitted or replaced with other steps.

Referring to FIG. 16, in operation 1601 according to an embodiment, the base station (gNB) may transmit an RRC reconfiguration message, and the UE may receive the same. The RRC reconfiguration message is an example and may be substituted with RRC signaling, an RRC message, or higher layer signaling. This is applied equally to the description of the disclosure unless specifically stated otherwise. In operation 1603 according to an embodiment, the UE may transmit an RRC reconfiguration complete message, and the base station may receive the same. In operation 1605 according to an embodiment, the base station may transmit a MAC CE, and the UE may receive the same. In operation 1607 according to an embodiment, the base station may transmit a UL grant DCI (e.g., format 0_0 or 0_1), and the UE may receive the same. In operation 1609 according to an embodiment, the UE may transmit a PUSCH based on the UL grant DCI, and the base station may receive the same.

More specific details regarding the above-described operations of the UE and the base station according to an embodiment of the disclosure may be found in the detailed descriptions provided below.

In order to support the operations according to an embodiment of the disclosure, the UE and/or the base station may support one or more of the following capabilities. For example, signaling for each capability may be supported. Specifically, the UE may transmit UE capability information indicating that it supports one or more of the following capabilities. When the base station determines that the UE supports one or more of the following capabilities based on the UE capability information, the base station may perform the PUCCH resource-level rate matching operation according to an embodiment of the disclosure.

- UE Perspective

    - - PHY Layer: Capability for receiving/decoding of information elements (IEs) related to rate matching pattern indication in DCI, and capability for transmitting/encoding of a rate-matched PUSCH
    - - MAC Layer: Capability for receiving/decoding of IEs related to rate matching pattern indication in MAC CE
    - - RRC Layer: Capability for receiving/decoding of IEs related to rate matching pattern indication in RRC signaling

- Base Station Perspective

    - - PHY Layer: Capability for transmitting/encoding of IEs related to rate matching pattern indication in DCI, and capability for receiving/decoding of a rate-matched PUSCH
    - - MAC Layer: Capability for transmitting/encoding of IEs related to rate matching pattern indication in MAC CE
    - - RRC Layer: Capability for transmitting/encoding of IEs related to rate matching pattern indication in RRC signaling

According to an embodiment of the disclosure, the respective IEs transmitted and received via RRC signaling, MAC CE, and DCI may be different, as will be described below.

According to an embodiment of the disclosure, the RRC reconfiguration message may include information on candidate LTE PUCCH resources. For example, the RRC reconfiguration message may include location information for the candidate LTE PUCCH resources. These candidate LTE PUCCH resources may be configured through the RRC reconfiguration message. The candidate LTE PUCCH resources may be intended for rate matching. That is, the candidate LTE PUCCH resources may be candidates to which rate matching is applied.

According to an embodiment of the disclosure, an LTE base station (e.g., an eNB) may transmit PUCCH resource configuration information to an NR base station (e.g., a gNB). Based on the PUCCH resource configuration information, the NR base station may identify corresponding candidate LTE PUCCH resources, generate/acquire candidate LTE PUCCH resource information, and transmit this information to the UE via an RRC reconfiguration message. For example, a plurality of PUCCH resources identified based on the PUCCH resource configuration information may be candidate LTE PUCCH resources to which rate matching will be applied.

According to an embodiment of the disclosure, when the base station identifies candidate LTE PUCCH resources, it may be assumed that there is one UE per PUCCH resource $(N_{\mathrm{CS}}^{(1)} = 0)$. Here, $N_{\mathrm{CS}}^{(1)}$ is the number of cyclic shifts (CSs) used for PUCCH formats 1/1a/1b in a resource block with a mix of formats 1/1a/1b and 2/2a/2b. Furthermore, in the disclosure, it may be assumed that code domain multiplex (CDM) (or code domain sharing) is not applied to the PUCCH resources. Specifically, when the base station identifies candidate LTE PUCCH resources, the assumption may be made that no CDM is used. That is, in the description of the disclosure, it may be assumed that a PUCCH resource is dedicated to a single UE and no CDM is configured.

However, this assumption is made for the purpose of identifying candidate LTE PUCCH resources, and the disclosure is not limited to PUCCH resources for a single UE where CDM is not configured. The disclosure may also be applied to PUCCH resources for a plurality of UEs where CDM is configured. That is, irrespective of the actual PUCCH resource configuration, the disclosure assumes that a PUCCH resource is for a single UE without CDM when identifying candidate LTE PUCCH resources. However, the PUCCH resources actually transmitted and received may either be for a single UE without CDM or for a plurality of UEs with CDM configured.

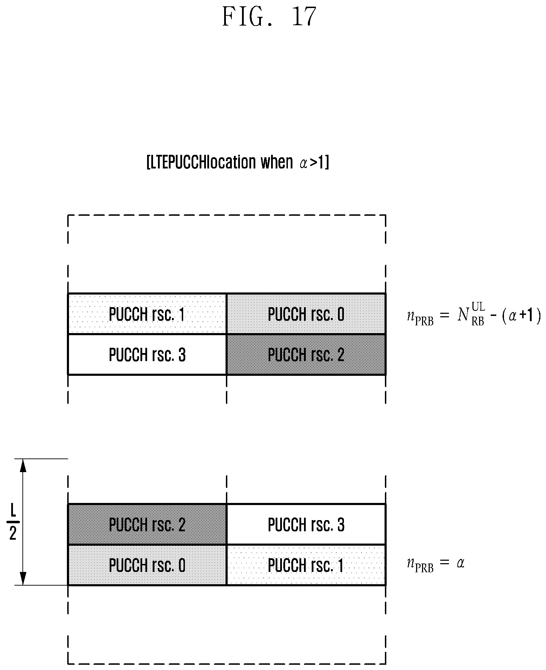

FIG. 17 is a diagram illustrating an example of an RRC parameter according to an embodiment of the disclosure.

Referring to FIG. 17, according to an embodiment of the disclosure, an RRC reconfiguration message may include one or more of the following RRC parameters:

1) The lowest RB index (hereinafter, $\alpha$) of a PUCCH of the other RAT (i.e., a target RAT for spectrum sharing, e.g., LTE). This may be understood as a start RB offset of the PUCCH of the other RAT. The start RB offset may be an offset relative to PRB0 among RBs included in a bandwidth.

2) The total number of rate matching patterns (hereinafter, L) or the total number of PUCCH RBs used in the other RAT. For example, if the other RAT is LTE and it is assumed that no CDM is configured, this may be the total number of available PUCCH resources in LTE. That is, it may be understood as the total number of PUCCH resources used in the other RAT. The specific definition of L may vary depending on embodiments described below, and it will be provided in the description of each embodiment.

Referring to FIG. 17, PUCCH resources may be configured in consecutive RBs from a start RB with index $\alpha$ to an RB with index $N_{RB}^{UL} - (\alpha + 1)$. That is, index $\alpha$ is an index of an RB where a PUCCH starts. Since intra-slot hopping is applied to an LTE PUCCH, a frequency region corresponding to L/2 may include half of RB pairs that constitute the PUCCH resources.

According to an embodiment of the disclosure, the RRC reconfiguration complete message may be a message transmitted to the base station when the UE is capable of supporting candidate rate matching patterns. The UE's support for the candidate rate matching patterns implies that the UE supports rate matching-related operations according to an embodiment of the disclosure. If the UE does not support the candidate rate matching patterns, it may instead transmit an RRC reconfiguration failure message to the base station. Upon receiving the RRC reconfiguration complete message, the base station may determine/identify that the UE supports the candidate rate matching patterns, and proceed to perform the rate matching-related operations according to an embodiment of the disclosure. Upon receiving the RRC reconfiguration failure message, the base station may determine/identify that the UE does not support the candidate rate matching patterns, and refrain from perform the rate matching-related operations according to an embodiment of the disclosure.

According to an embodiment of the disclosure, instead of relying on the RRC reconfiguration complete/failure messages, the UE may transmit capability information regarding its support for candidate rate matching patterns prior to receiving the RRC reconfiguration message. In this case, the base station may identify/determine whether the UE supports the candidate rate matching patterns, based on the capability information received from the UE.

According to an embodiment of the disclosure, a MCE CE may be used to update a bitmap included in DCI for a dynamic rate matching pattern. Alternatively, the MAC CE may be used to configure a periodic rate matching pattern.

According to an embodiment of the disclosure, the DCI may be a UL grant DCI for scheduling a PUSCH. The DCI may indicate a rate matching pattern for the scheduled PUSCH.

According to an embodiment of the disclosure, methods for indicating a rate matching pattern may be classified into a method capable of indicating rate matching for a single PUCCH resource and a method capable of indicating rate matching for a plurality of PUCCH resources. According to the method for indicating rate matching for a plurality of PUCCH resources, rate matching may be indicated for one or more PUCCH resources. That is, this method does not necessarily imply that multiple PUCCH resources must always be indicated.

Each method is described below. In the description of each method, parameter B may be the number of bits required to represent the entire rate matching pattern (or the total number of rate matching patterns). According to an embodiment of the disclosure, one or more of the following embodiments and/or a combination of at least some of the following embodiments may be used.

Embodiment 1 - Method capable of indicating rate matching for a single PUCCH resource

According to an embodiment of the disclosure, $B = \lceil log_2(L) \rceil$ bits within DCI or a MAC CE may be used to indicate a single PUCCH resource. Here, L may be the total number of PUCCH resources.

Method 1-1) According to an embodiment of the disclosure, each PUCCH resource may be indicated by a single parameter based on B bits. Each bit included in B bits may indicate a PUCCH resource index.

Method 1-2) According to an embodiment of the disclosure, each PUCCH resource may be indicated by two parameters based on B bits. Among B bits, B-1 bits may indicate a frequency domain location of the PUCCH resource. That is, the B-1 bits among the B bits may indicate an RB index of the PUCCH resource. The remaining 1 bit, excluding the B-1 bits, may indicate a time domain location (and/or a symbol domain location and/or a symbol index) of the PUCCH resource.

Referring again to FIG. 17, the B-1 bits may indicate $\alpha, \ldots, N_{RB}^{UL} - (\alpha + 1)$ . For example, if the B-1 bits indicate $\alpha$ and the remaining 1 bit is 0, it may be understood that PUCCH resource #0 is indicated. For example, if the B-1 bits indicate $\alpha$ and the remaining 1 bit is 1, it may be understood that PUCCH resource #1 is indicated. That is, based on a slot boundary within a subframe, the remaining 1 bit, excluding the B-1 bits among the B bits, may indicate whether an RB for the first slot or an RB for the second slot is indicated. The remaining 1 bit may be, but is not limited to, the most significant bit (MSB) or the least significant bit (LSB) of the B bits.

According to an embodiment of the disclosure, $B = \lceil log_2(L) \rceil$ bits within DCI or a MAC CE may be used to indicate a single PUCCH RB. Here, L may be the total number of PUCCH RBs. Alternatively, it may be half of the total number of PUCCH resources.

Method 1-3) According to an embodiment of the disclosure, each PUCCH RB may be indicated based on B bits. The B bits may indicate a frequency domain location of the PUCCH resource. That is, the B bits may indicate an RB index of the PUCCH resource. In the case of an LTE PUCCH (or when intra-slot frequency hopping is enabled), each index may indicate two RBs. Otherwise, each index may indicate one RB.

Referring again to FIG. 17, the B bits may indicate $\alpha, \ldots, N_{RB}^{UL} - (\alpha + 1)$ . For example, if the B bits indicate $\alpha$, it can be understood that two RBs are indicated: the RB corresponding to PUCCH resource #0 in the first slot and the RB corresponding to PUCCH resource #0 in the second slot. That is, an index indicated by the B bits may be understood as an index indicating an RB corresponding to that index in the first slot and two RBs such as (maximum number of RBs - RB of the indicated index) in the second slot. For example, if it is indicated that rate matching is to be applied to RB $\alpha$, the UE may apply rate matching to PUCCH resource #0 and PUCCH resource #1. That is, based on the slot boundary, PUCCH resource #0 and PUCCH resource #1 in the first slot, and PUCCH resource #0 and PUCCH resource #1 in the second slot may be rate-matched. In cases other than LTE PUCCH, or when intra-slot frequency hopping is not applied, an index indicated by the B bits may be understood as indicating a single RB corresponding to that index. For example, Method 1-3 may be used when complexity reduction/simplification is required or when PUCCH DMRS resources are configured with one symbol, but is not limited thereto.

Methods 1-1 through 1-3 may be summarized as shown in Table 20.

[Table 20]

| PUCCH resource | Method 1-1 | Method 1-2 | | Method 1-3 |
|---|---|---|---|---|
| | Index represented by B bits | Index represented by B-1 bits | Index represented by 1 bit | Index represented by B bits |
| PUCCH resource #0 | 0 | 0 | 0 | 0 |
| PUCCH resource #1 | 1 | | 1 | |
| PUCCH resource #2 | 2 | 1 | 0 | 1 |
| PUCCH resource #3 | 3 | | 1 | |
| ... | ... | ... | ... | ... |
| PUCCH resource #L-1 | L-1 | (L/2)-1 | 1 | (L/2)-1 |

In Table 20, the number of bits included in B bits applied in Method 1-3 may be one less than the number of bits included in B bits applied in Method 1-1 and Method 1-2. For example, if there are 10 PUCCH resources (#0,...,#9), the B bits for Methods 1-1 and 1-2 may be determined as 10 bits, whereas the B bits for Method 1-3 may be determined as 9 bits.

Embodiment 2 - Method capable of indicating rate matching for a plurality of PUCCH resources

Method 2-1) According to an embodiment of the disclosure, B=L bits within DCI or a MAC CE may be used to indicate one or more PUCCH resources.

According to an embodiment of the disclosure, a PUCCH resource index may be indicated. L may be the total number of PUCCH resources. The 1-th bit of the B=L bits may be mapped to the 1-th PUCCH resource among the L PUCCH resources. For example, if the value of the 1-th bit is '1' (or '0'), rate matching may be performed on the 1-th PUCCH resource. Conversely, if the value of the 1-th bit is '0' (or '1'), rate matching may not be performed on the 1-th PUCCH resource. That is, the B=L bits may indicate, as a bitmap, whether rate matching is performed on each PUCCH resource.

Method 2-2) According to an embodiment of the disclosure, B=L bits within DCI or a MAC CE may be used to indicate one or more PUCCH RBs.

According to an embodiment of the disclosure, a PUCCH RB index may be indicated. L may be the total number of PUCCH RBs. Alternatively, it may be half of the total number of PUCCH resources. The 1-th bit of the B=L bits may be mapped to the 1-th PUCCH RB among the L PUCCH RBs. For example, if the value of the 1-th bit is '1' (or '0'), rate matching may be performed on the 1-th PUCCH RB. Conversely, if the value of the 1-th bit is '0' (or '1'), rate matching may not be performed on the 1-th PUCCH RB. That is, the B=L bits may indicate, as a bitmap, whether rate matching is performed on each PUCCH RB.

In the case of an LTE PUCCH (or when intra-slot frequency hopping is enabled), the 1-th bit of the B=L bits (or each bit included in the B=L bits) may indicate two RBs. For example, the first bit may indicate whether rate matching is to be applied to RB $\alpha$ and RB $N_{\text{RB}}^{\text{UL}} - (\alpha + 1)$. If the first bit indicates that rate matching is to be applied, the UE may apply rate matching to both PUCCH resource #0 and PUCCH resource #1. That is, based on a slot boundary, PUCCH resource #0 and PUCCH resource #1 may be rate-matched in the first slot, and PUCCH resource #0 and PUCCH resource #1 may be rate-matched in the second slot. Otherwise (in cases other than an LTE PUCCH and/or when intra-slot frequency hopping is disabled), the 1-th bit of the B=L bits may indicate a single RB.

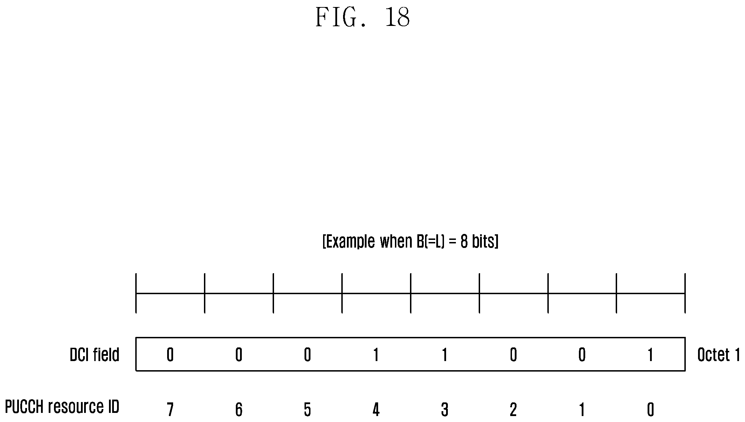

FIG. 18 is a diagram illustrating an example of a bit field in a DCI according to an embodiment of the disclosure.

Referring to FIG. 18, a DCI field may include one octet, i.e., 8 bits, which may imply that L=8. For example, if the DCI field is '00011001', rate matching may be performed for PUCCH resource IDs 0, 3, and 4. That is, after rate matching is performed at the RE positions corresponding to PUCCH resource IDs 0, 3, and 4, the rate-matched PUSCH may be transmitted. As another example, if the DCI field is '00000001', rate matching may be performed for PUCCH resource ID 7. That is, after rate matching is performed at the RE positions corresponding to PUCCH resource ID 7, the rate-matched PUSCH may be transmitted.

Embodiment 3 - Method capable of indicating rate matching for a plurality of PUCCH resources

According to an embodiment of the disclosure, B<L bits within DCI may be used to indicate one or more PUCCH resources (or RBs).

According to an embodiment of the disclosure, a subset of candidate PUCCH resources (or RBs) configured via RRC signaling may be indicated by a MAC CE, and a candidate PUCCH resource (or RB) among the subset indicated by the MAC CE may be indicated by DCI.

Method 3-1) According to an embodiment of the disclosure, a PUCCH resource index may be indicated. L may be the total number of PUCCH resources.

According to an embodiment of the disclosure, a bitmap representing a set of expected total PUCCH resources among all available PUCCH resources may be indicated by a MAC CE. The 1-th bit of the bitmap may be mapped to the l-th PUCCH resource among L PUCCH resources. For example, if the value of the 1-th bit is '1' (or '0'), it may indicate that the 1-th PUCCH resource is selected as an activated rate matching pattern. Conversely, if the value of the lth bit is '0' (or '1'), it may indicate that the 1-th PUCCH resource is not selected as an activated rate matching pattern. The maximum number M of activated rate matching patterns that can be indicated by the MAC CE may be $2^B$.

According to an embodiment of the disclosure, a bit field within DCI may indicate the activated rate matching pattern (previously indicated by a MAC CE) in the form of a bitmap. For example, the b-th bit of the bitmap in the DCI may be mapped to the b-th PUCCH resource in the activated rate matching pattern, i.e., among the PUCCH resources indicated by the MAC CE. For example, if the value of the b-th bit is '1' (or '0'), rate matching may be performed on the b-th PUCCH resource. Conversely, if the value of the b-th bit is '0' (or '1'), rate matching may not be performed on the b-th PUCCH resource.

Method 3-2) According to an embodiment of the disclosure, a PUCCH RB index may be indicated. L may be the total number of PUCCH RBs. Alternatively, it may be half of the total number of PUCCH resources.

According to an embodiment of the disclosure, a bitmap representing a set of expected total PUCCH RBs among all available PUCCH RBs may be indicated by a MAC CE. The 1-th bit of the bitmap may be mapped to the 1-th PUCCH RB among L PUCCH RBs. For example, if the value of the 1-th bit is '1' (or '0'), it may indicate that the 1-th PUCCH RB is selected as an activated rate matching pattern. Conversely, if the value of the 1th bit is '0' (or '1'), it may indicate that the 1-th PUCCH RB is not selected as an activated rate matching pattern. The maximum number M of activated rate matching patterns that can be indicated by the MAC CE may be $2^B$.

In the case of an LTE PUCCH (or when intra-slot frequency hopping is enabled), the 1-th bit of the bitmap in the MAC CE (or each bit included in the MAC CE bitmap) may indicate two RBs. For example, the RBs indicated by the 1-th bit of the MAC CE bitmap may be the RB corresponding to index 1 and the RB corresponding to the index (maximum index of RB - ($\alpha$ + RB of the indicated index)). For example, the first bit may correspond to RB $\alpha$ and RB $N_{RB}^{UL} - (\alpha + 1)$.

Otherwise (in cases other than an LTE PUCCH and/or when intra-slot frequency hopping is disabled), the 1-th bit among the B=L bits may indicate a single RB.

According to an embodiment of the disclosure, a bit field within DCI may indicate the activated rate matching pattern (previously indicated by a MAC CE) in the form of a bitmap. For example, the b-th bit of the bitmap in the DCI may be mapped to the b-th PUCCH RB in the activated rate matching pattern, i.e., among the PUCCH RBs indicated by the MAC CE. For example, if the value of the b-th bit is '1' (or '0'), rate matching may be performed on the b-th PUCCH RB. Conversely, if the value of the b-th bit is '0' (or '1'), rate matching may not be performed on the b-th PUCCH RB.

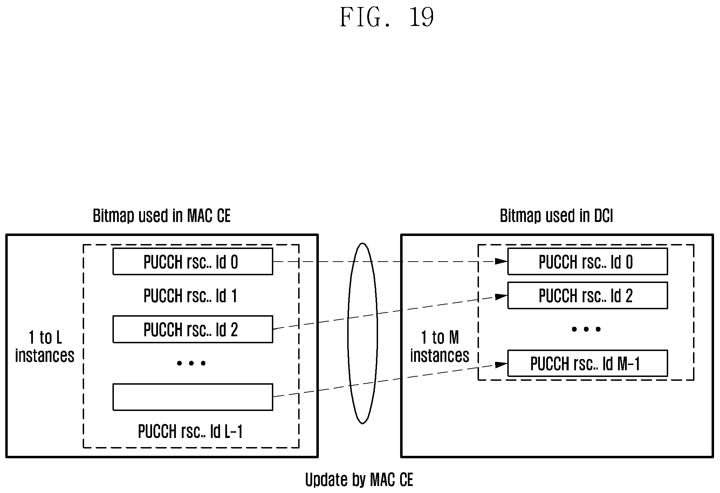

FIG. 19 is a diagram illustrating an example of the relationship between a bitmap included in a MAC CE and a bitmap included in DCI according to an embodiment of the disclosure.

Referring to FIG. 19, the bitmap included in the MAC CE may indicate M activated PUCCH resources among the L PUCCH resources configured via RRC. The bitmap included in the DCI may indicate specific PUCCH resources to which rate matching is to be applied among the M PUCCH resources activated by the MAC CE. Therefore, the bitmap included in the DCI may include M bits.

For example, the M PUCCH resources activated by the MAC CE may be applied after a certain time from the reception of the MAC CE (or the PDSCH carrying the MAC CE). For example, if the MAC CE (or the PDSCH carrying the MAC CE) is received in slot #n, the M PUCCH resources activated by the MAC CE may be applied starting from slot #n+k, where k is an integer greater than or equal to 0. The value of k may be predefined and/or configured by higher layer signaling.

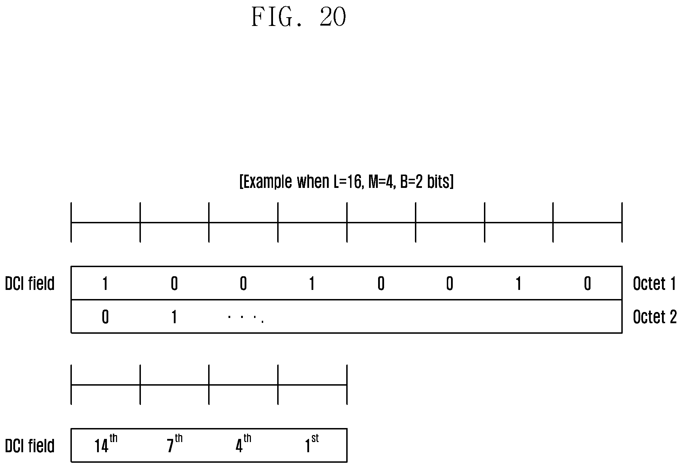

FIG. 20 is a diagram illustrating an example of the relationship between a bitmap included in a MAC CE and a bitmap included in DCI according to an embodiment of the disclosure. FIG. 20 shows an example where L=16 and B=4.

Referring to FIG. 20, the 16-bit bitmap included in the MAC CE may indicate the indexes of activated PUCCH resources among the 16 PUCCH resources configured via RRC. For example, if the 1st, 4th, 7th, and 14th bits of the 16 bits in the MAC CE are set to 1 and the remaining bits are set to 0, the 1st, 4th, 7th, and 14th PUCCH resources among the 16 PUCCH resources may be activated. The bitmap included in the DCI may indicate whether rate matching is to be performed for the activated 1st, 4th, 7th, and 14th PUCCH resources.

According to an embodiment of the disclosure, whether an IE related to rate matching pattern indication is included in the DCI may be identified or determined as follows.

- If an RRC reconfiguration message does not contain information on candidate PUCC resources (e.g., information about $\alpha$ and/or L), the DCI may not include the rate matching pattern indication-related IE.
- If the RRC reconfiguration message contains information on candidate PUCC resources (e.g., information about $\alpha$ and/or L),

  - - The DCI always includes the rate matching pattern indication-related IE, or
  - - The DCI includes a 1-bit flag indicating the presence of the rate matching pattern indication-related IE. If the 1-bit flag is '1' (or '0'), the DCI includes the rate matching pattern indication-related IE. If the 1-bit flag is '0' (or '1'), the DCI does not include the rate matching pattern indication-related IE, and/or
  - - If all bits within the rate matching pattern indication-related IE in the DCI are set to all '0's or all '1's, it may indicate that no rate matching is to be performed.

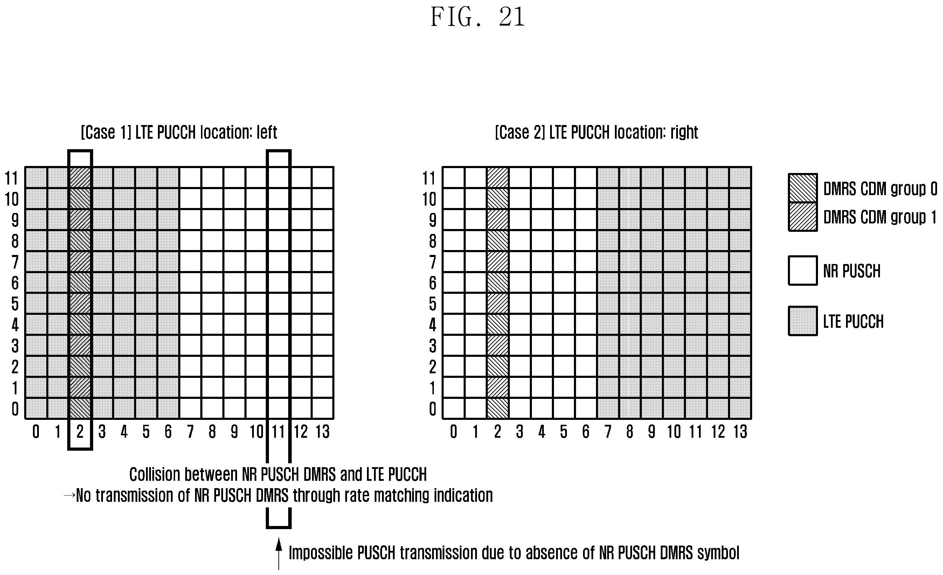

FIG. 21 is a diagram illustrating a DM-RS applicable to PUSCH transmission according to an embodiment of the disclosure.

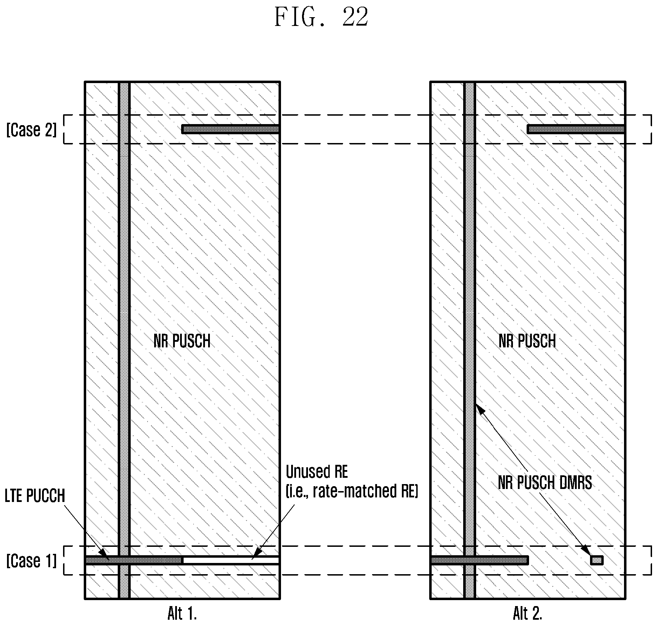

FIG. 22 is a diagram illustrating a DM-RS applicable to PUSCH transmission according to an embodiment of the disclosure.

Referring to FIG. 21, when an additional demodulation reference signal (DM-RS) is not configured (e.g., dmrs-AdditionalPosition = 0), the DM-RS for a PUSCH may be mapped to a single symbol within a slot (e.g., the DM-RS symbol of symbol #2). The DM-RS mapped to one symbol may be composed of CDM group 0 and CDM group 1.

For example, if an LTE PUCCH corresponds to symbols #7 to #13 (right side, Case 2), rate matching is applied to symbols #7 to #13, and the PUSCH, along with its DM-RS, can be transmitted in symbols #0 to #6.

On the other hand, if an LTE PUCCH corresponds to symbols #0 to #6 (left side, Case 1), rate matching is applied to symbols #0 to #6. In this case, while the PUSCH should be transmitted in symbols #7 to #13, the DM-RS for the PUSCH cannot be transmitted because there is no DM-RS is configured in symbols #7 to #13. Consequently, this may lead to a problem where channel estimation is impossible at the receiver.

According to an embodiment of the disclosure, one or more of the following methods may be applied to a PRB (index n) corresponding to Case 1.

1) According to an embodiment of the disclosure, rate matching may be performed for all symbols (e.g., symbols #0 to #13) within PRB n. Referring to Alt. 1 in FIG. 22, the REs included in PRB n are rate-matched and thus not used for PUSCH transmission.

2) According to an embodiment of the disclosure, rate matching may be performed for all symbols (e.g., symbols #0 to #13) within PRB n. Referring to Alt.2 in FIG. 22, the DM-RS symbol may be shifted to any one of symbols #7 to #13 (e.g., symbol #11) in PRB n. In this case, the PUSCH and its corresponding DM-RS can be transmitted within symbols #7 to #13 in PRB n.

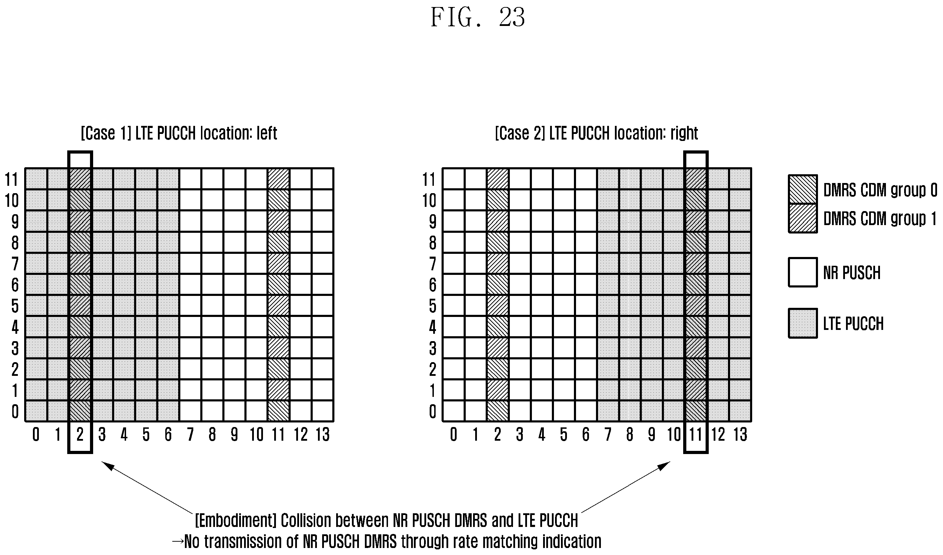

FIG. 23 is a diagram illustrating a DM-RS applicable to PUSCH transmission according to an embodiment of the disclosure.

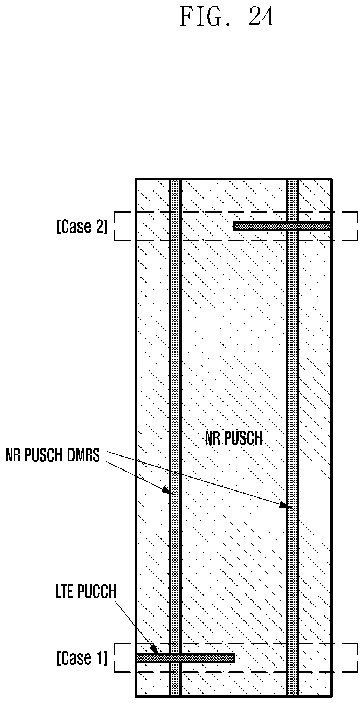

FIG. 24 is a diagram illustrating a DM-RS applicable to PUSCH transmission according to an embodiment of the disclosure.

Referring to FIGS. 23 and 24, when an additional demodulation reference signal (DM-RS) is configured (e.g., dmrs-AdditionalPosition > 0), the DM-RS for a PUSCH may be mapped to two symbols within a slot (e.g., DM-RS symbols of symbol #2 and symbol #11). The DM-RS mapped to one symbol may be composed of CDM group 0 and CDM group 1.

For example, if an LTE PUCCH corresponds to symbols #0 to #6 (left side, Case 1), rate matching is applied to symbols #0 to #6, and the PUSCH, along with its DM-RS (symbol #11), can be transmitted in symbols #7 to #13. In this case, the DM-RS for the PUSCH may not be transmitted in symbol #2. The base station can perform channel estimation from the DM-RS for the PUSCH in symbol #11.

For example, if an LTE PUCCH corresponds to symbols #7 to #13 (right side, Case 2), rate matching is applied to symbols #7 to #13, and the PUSCH and its corresponding DM-RS (symbol #2) can be transmitted in symbols #0 to #6. In this case, the DM-RS for the PUSCH may not be transmitted in symbol #11. The base station can perform channel estimation from the DM-RS for the PUSCH in symbol #2.

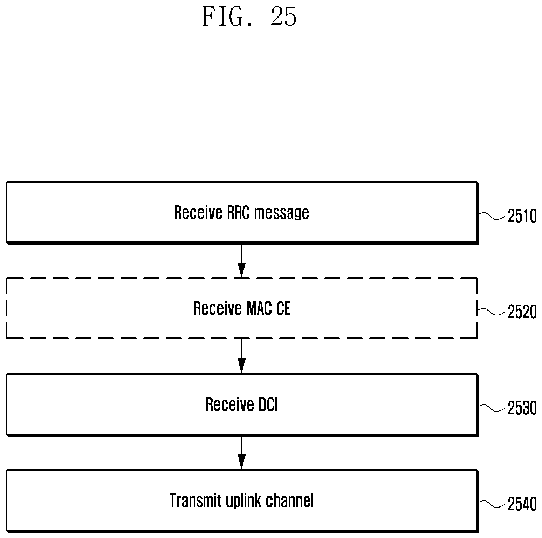

FIG. 25 is a diagram illustrating an example of an operation flowchart of a UE according to an embodiment of the disclosure. Various modifications may be made to the method depicted in the flowchart of FIG. 25. For example, although illustrated as a series of steps, various steps in the flowchart may overlap, occur in parallel, occur in a different order, or occur multiple times. In other examples, certain steps may be omitted or replaced with other steps.

Referring to FIG. 25, in operation 2510 according to an embodiment, the UE may receive information related to candidate physical uplink control channel (PUCCH) resources in a first radio access technology (RAT) via higher layer signaling (e.g., an RRC message).

In operation 2520 according to an embodiment, the UE may receive information related to activated candidate PUCCH resources among the candidate PUCCH resources via a medium access control element (MAC CE). Operation 2520 according to an embodiment may be omitted.

In operation 2530 according to an embodiment, the UE may receive downlink control information (DCI) that schedules a physical uplink shared channel (PUSCH) (or uplink channel). The DCI may include a bit field indicating a candidate PUCCH resource included in the candidate PUCCH resources. For example, if the MAC CE is received in operation 2520 according to an embodiment, the bit field may indicate a candidate PUCCH resource among the activated candidate PUCCH resources. For example, if the MAC CE is not received in operation 2520 according to an embodiment, the bit field may indicate a candidate PUCCH resource among candidate PUCCH resources delivered via higher layer signaling.

In operation 2540 according to an embodiment, the UE may transmit an uplink channel based on the DCI. Rate-matching may be applied to a resource element (RE) that overlaps with the candidate PUCCH resources indicated by the DCI, among REs included in the uplink channel.

For more specific details on the above-described UE operations according to an embodiment of the disclosure, refer to the above description regarding embodiments of the disclosure.

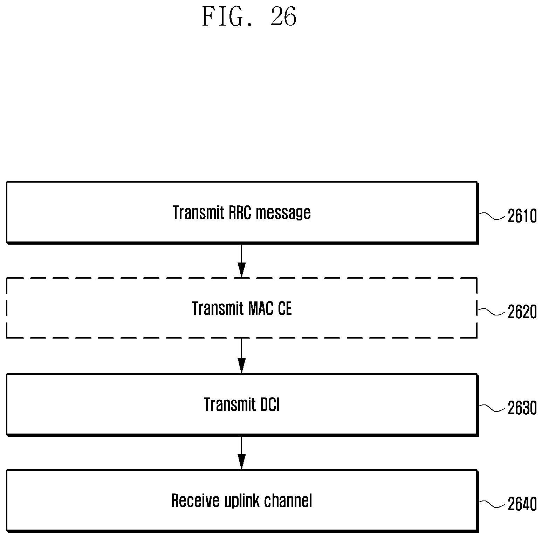

FIG. 26 is a drawing illustrating an example of an operation flowchart of a base station according to an embodiment of the disclosure. Various modifications may be made to the method depicted in the flowchart of FIG. 26. For example, although illustrated as a series of steps, various steps in the flowchart may overlap, occur in parallel, occur in a different order, or occur multiple times. In other examples, certain steps may be omitted or replaced with other steps.

Referring to FIG. 26, in operation 2610 according to an embodiment, the base station may transmit information related to candidate physical uplink control channel (PUCCH) resources in a first radio access technology (RAT) via higher layer signaling (e.g., an RRC message).

In operation 2620 according to an embodiment, the base station may transmit information related to activated candidate PUCCH resources among the candidate PUCCH resources via a medium access control element (MAC CE). Operation 2620 according to an embodiment may be omitted.

In operation 2630 according to an embodiment, the base station may transmit downlink control information (DCI) that schedules a physical uplink shared channel (PUSCH) (or uplink channel). The DCI may include a bit field indicating a candidate PUCCH resource included in the candidate PUCCH resources. For example, if the MAC CE is transmitted in operation 2620 according to an embodiment, the bit field may indicate a candidate PUCCH resource among the activated candidate PUCCH resources. For example, if the MAC CE is not transmitted in operation 2620 according to an embodiment, the bit field may indicate a candidate PUCCH resource among candidate PUCCH resources delivered through higher layer signaling.

In operation 2640 according to an embodiment, the base station may receive an uplink channel. Rate-matching may be applied to a resource element (RE) that overlaps with the candidate PUCCH resources indicated by the DCI, among REs included in the uplink channel.

For more specific details on the above-described base station operations according to an embodiment of the disclosure, refer to the above description regarding embodiments of the disclosure.

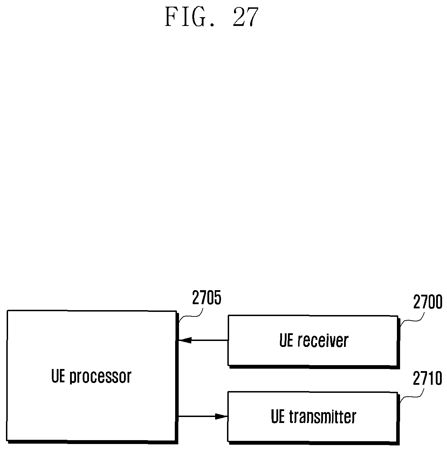

FIG. 27 is a diagram illustrating the structure of a UE in a wireless communication system according to an embodiment of the disclosure.

Referring to FIG. 27, the UE may include a transceiver referring to a UE receiver 2700 and a UE transmitter 2710, a memory (not shown), and a UE processor 2705 (or a controller or processor). The UE transceiver 2700 and 2710, the memory, and the UE processor 2705 may operate in accordance with the above-described communication method of the UE. However, the components of the UE are not limited to the above-described example. For example, the UE may include more or fewer components than those aforementioned. In addition, the transceiver, the memory, and the processor may be implemented in the form of a single chip.

The transceiver may transmit/receive a signal to/from a base station. Here, the signal may include control information and data. To this end, the transceiver may include an RF transmitter for up-converting and amplifying a frequency of a transmitted signal, and an RF receiver for low-noise amplifying a received signal and down-converting a frequency of the received signal. However, this is only an embodiment of the transceiver, and components of the transceiver are not limited to the RF transmitter and the RF receiver.

In addition, the transceiver may receive a signal through a radio channel and output the received signal to the processor, and may transmit a signal output from the processor through a radio channel.

The memory may store programs and data required for the operation of the UE. In addition, the memory may store control information or data included in a signal transmitted and received by the UE. The memory may include a storage medium such as a ROM, a RAM, a hard disk, a CD-ROM, and a DVD, or a combination of storage media. Furthermore, there may be a plurality of memories.

In addition, the processor may control a series of processes so that the UE may operate in accordance with the above-described embodiments. For example, the processor may control the components of the UE to receive DCI consisting of two layers and simultaneously receive multiple PDSCHs. There may be a plurality of processors, and the processor may perform an operation of controlling the components of the UE by executing programs stored in the memory.

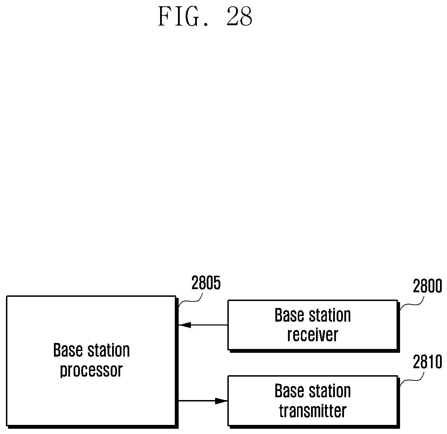

FIG. 28 is a diagram illustrating the structure of a base station in a wireless communication system according to an embodiment of the disclosure.

Referring to FIG. 28, the base station may include a transceiver referring to a base station receiver 2800 and a base station transmitter 2810, a memory (not shown), and a base station processor 2805 (or a base station controller or processor). The base station transceiver 2800 and 2810, the memory, and the base station processor 2805 may operate in accordance with the above-described communication method of the base station. However, the components of the base station are not limited to the above-described example. For example, the base station may include more or fewer components than those aforementioned. In addition, the transceiver, the memory, and the processor may be implemented in the form of a single chip.

The transceiver may transmit/receive a signal to/from a UE. Here, the signal may include control information and data. To this end, the transceiver may include an RF transmitter for up-converting and amplifying a frequency of a transmitted signal, and an RF receiver for low-noise amplifying a received signal and down-converting a frequency of the received signal. However, this is only an embodiment of the transceiver, and components of the transceiver are not limited to the RF transmitter and the RF receiver.

In addition, the transceiver may receive a signal through a radio channel and output the signal to the processor, and may transmit the signal output from the processor through a radio channel.

The memory may store programs and data necessary for the operation of the base station. In addition, the memory may store control information or data included in a signal transmitted and received by the base station. The memory may include a storage medium such as a ROM, a RAM, a hard disk, a CD-ROM, and a DVD, or a combination of storage media. Furthermore, there may be a plurality of memories.

The processor may control a series of processes so that the base station may operate in accordance with the above-described embodiments. For example, the processor may control the components of the base station to compose DCI of two layers including allocation information regarding multiple PDSCHs and transmit the DCI. There may be a plurality of processors, and the processor may perform an operation of controlling the components of the base station by executing programs stored in the memory.

The methods according to embodiments described herein or claims may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments as defined by the appended claims and/or disclosed herein.

The programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, the programs may be stored in a memory composed of any combination of some or all of them. Further, a plurality of such memories may be included.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access the device that performs embodiments of the disclosure.

In the above-described detailed embodiments, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments described herein are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Further, the above respective embodiments may be employed in combination, as necessary. For example, an embodiment of the disclosure may be partially combined with another embodiment to operate a base station and a UE. As an example, embodiments 1 and 2 of the disclosure may be partially combined to operate a base station and a UE. Further, although the above embodiments have been described by way of the FDD LTE system, other variants based on the technical idea of the embodiments may be implemented in other systems such as TDD LTE and 5G or NR systems.

Meanwhile, in the drawings in which methods of the disclosure are described, the order of description does not necessarily correspond to the order of execution, and the order of precedence may be changed or the steps may be executed in parallel.

Alternatively, in the drawings in which methods of the disclosure are described, some elements may be omitted and only some elements may be included therein without departing from the essential spirit and scope of the disclosure.

Furthermore, in methods of the disclosure, some or all of the contents of each embodiment may be implemented in combination without departing from the essential spirit and scope of the disclosure.

Various embodiments of the disclosure have been described. The above description of the disclosure is merely for the purpose of illustration, and is not intended to limit embodiments of the disclosure to the embodiments set forth herein. Those skilled in the art will appreciate that other specific modifications and changes may be easily made thereto without changing the technical idea or essential features of the disclosure. The scope of the disclosure should be determined not by the above description but by the appended claims, and all changes and modifications derived from the meaning and scope of the claims and equivalent concepts thereof shall be construed as falling within the scope of the disclosure.

## Claims

1. A method performed by a terminal in a communication system, the method comprising:

receiving, via higher layer signaling, information related to candidate physical uplink control channel (PUCCH) resources in a first radio access technology (RAT);
receiving downlink control information (DCI) for scheduling a physical uplink shared channel (PUSCH) in a second RAT, wherein the DCI includes a bit field indicating a candidate PUCCH resource included in the candidate PUCCH resources;
performing rate-matching applied to a resource element (RE) overlapping with the candidate PUCCH resource from among REs included in the PUSCH; and
transmitting the PUSCH to which the rate-matching is applied.

2.  The method of claim 1, wherein a number of bits in the bit field is determined as a value satisfying $\lceil \log_2 L \rceil$, where L is related to a number of the candidate PUCCH resources, and

wherein the bit field indicates a value corresponding to an index of the candidate PUCCH resource, or
wherein one bit in the bit field indicates a value corresponding to a time domain location of the candidate PUCCH resource, and remaining bits in the bit field excluding the one bit indicate a value corresponding to a frequency domain location of the PUCCH resource.

3.  The method of claim 1, wherein in case that a medium access control (MAC) control element (CE) indicating activated candidate PUCCH resources among the candidate PUCCH resources is received, the bit field is a first bitmap indicating the candidate PUCCH resource included in the activated candidate PUCCH resources and a size of the first bitmap is equal to a number of the activated candidate PUCCH resources,

wherein in case that the MAC CE is not received, the bit field is a second bitmap indicating the candidate PUCCH resource included in the candidate PUCCH resources and a size of the second bitmap is equal to a number of the candidate PUCCH resources,
wherein in case that the MAC CE is received, the activated candidate PUCCH resources are applied after a slot offset from a slot where the MAC CE is received, and
wherein the slot offset is a predefined value or is configured via higher layer signaling.

4.  The method of claim 1, wherein the information on the candidate PUCCH resources includes information related to a starting resource block (RB) index of the candidate PUCCH resources in a frequency domain and information related to a number of the candidate PUCCH resources,

wherein based on the information related to the starting RB index and the information related to the number of the candidate PUCCH resources being received via the higher layer signaling, the DCI further includes an indicator of whether the bit field is included in the DCI, and
wherein in case that the bit field is set to all '1' or set to all '0', the rate-matching is not performed.

5.  The method of claim 1, wherein in case that the RE to which the rate-matching is applied corresponds to symbols included in a first half-slot of a slot for the PUSCH and a demodulation reference signal (DM-RS) for the PUSCH is configured for one of the symbols included in the first half-slot of the slot for the PUSCH:

the RE corresponding to all symbols of the slot for the PUSCH is rate-matched in an RB corresponding to the candidate PUCCH resource, or
the DM-RS is transmitted in one of symbols included in a second half-slot of the slot for the PUSCH.

6.  The method of claim 1, wherein in case that a DM-RS for the PUSCH is configured for a first symbol among symbols included in a first half-slot of a slot for the PUSCH and a second symbol among symbols included in a second half-slot of the slot for the PUSCH:

in case that the RE to which the rate-matching is applied corresponds to the symbols included in the first half-slot, the DM-RS configured for the first symbol is not transmitted and the DM-RS configured for the second symbol is transmitted, and
in case that the RE to which the rate-matching is applied corresponds to the symbols included in the second half-slot, the DM-RS configured for the first symbol is transmitted and the DM-RS configured for the second symbol is not transmitted.

7.  A terminal in a communication system, the terminal comprising:

a transceiver; and
a processor connected to the transceiver, the processor configured to:

receive, via higher layer signaling, information related to candidate physical uplink control channel (PUCCH) resources in a first radio access technology (RAT);

receive downlink control information (DCI) for scheduling a physical uplink shared channel (PUSCH) in a second RAT, wherein the DCI includes a bit field indicating a candidate PUCCH resource included in the candidate PUCCH resources;

perform rate-matching applied to a resource element (RE) overlapping with the candidate PUCCH resource from among REs included in the PUSCH; and

transmit the PUSCH to which the rate-matching is applied.

8. The terminal of claim 7, wherein a number of bits in the bit field is determined as a value satisfying $\lceil \log_2 L \rceil$, where L is related to a number of the candidate PUCCH resources, and

wherein the bit field indicates a value corresponding to an index of the candidate PUCCH resource, or

wherein one bit in the bit field indicates a value corresponding to a time domain location of the candidate PUCCH resource, and remaining bits in the bit field excluding the one bit indicate a value corresponding to a frequency domain location of the PUCCH resource.

9. The terminal of claim 7, wherein in case that a medium access control (MAC) control element (CE) indicating activated candidate PUCCH resources among the candidate PUCCH resources is received, the bit field is a first bitmap indicating the candidate PUCCH resource included in the activated candidate PUCCH resources and a size of the first bitmap is equal to a number of the activated candidate PUCCH resources,

wherein in case that the MAC CE is not received, the bit field is a second bitmap indicating the candidate PUCCH resource included in the candidate PUCCH resources and a size of the second bitmap is equal to a number of the candidate PUCCH resources,

wherein in case that the MAC CE is received, the activated candidate PUCCH resources are applied after a slot offset from a slot where the MAC CE is received, and

wherein the slot offset is a predefined value or is configured via higher layer signaling.

10. The terminal of claim 7, wherein the information on the candidate PUCCH resources includes information related to a starting resource block (RB) index of the candidate PUCCH resources in a frequency domain and information related to a number of the candidate PUCCH resources,

wherein based on the information related to the starting RB index and the information related to the number of the candidate PUCCH resources being received via the higher layer signaling, the DCI further includes an indicator of whether the bit field is included in the DCI, and

wherein in case that the bit field is set to all '1' or set to all '0', the rate-matching is not performed.

11. The terminal of claim 7, wherein in case that the RE to which the rate-matching is applied corresponds to symbols included in a first half-slot of a slot for the PUSCH and a demodulation reference signal (DM-RS) for the PUSCH is configured for one of the symbols included in the first half-slot of the slot for the PUSCH:

the RE corresponding to all symbols of the slot for the PUSCH is rate-matched in an RB corresponding to the candidate PUCCH resource, or

the DM-RS is transmitted in one of symbols included in a second half-slot of the slot for the PUSCH.

12. The terminal of claim 7, wherein in case that a DM-RS for the PUSCH is configured for a first symbol among symbols included in a first half-slot of a slot for the PUSCH and a second symbol among symbols included in a second half-slot of the slot for the PUSCH:

in case that the RE to which the rate-matching is applied corresponds to the symbols included in the first half-slot, the DM-RS configured for the first symbol is not transmitted and the DM-RS configured for the second symbol is transmitted, and

in case that the RE to which the rate-matching is applied corresponds to the symbols included in the second half-slot, the DM-RS configured for the first symbol is transmitted and the DM-RS configured for the second symbol is not transmitted.

13. A method performed by a base station in a communication system, the method comprising:

transmitting, via higher layer signaling, information related to candidate physical uplink control channel (PUCCH) resources in a first radio access technology (RAT);

transmitting downlink control information (DCI) for scheduling a physical uplink shared channel (PUSCH) in a second RAT, wherein the DCI includes a bit field indicating a candidate PUCCH resource included in the candidate PUCCH resources; and

receiving the PUSCH,

wherein rate-matching is applied to a resource element (RE) overlapping with the candidate PUCCH resource from among REs included in the PUSCH.

14. The method of claim 13, wherein in case that a medium access control (MAC) control element (CE) indicating activated candidate PUCCH resources among the candidate PUCCH resources is transmitted, the bit field is a first bitmap indicating the candidate PUCCH resource included in the activated candidate PUCCH resources, a size of the first bitmap being equal to a number of the activated candidate PUCCH resources, and

in case that the MAC CE is not transmitted, the bit field is a second bitmap indicating the candidate PUCCH resource included in the candidate PUCCH resources, a size of the second bitmap being equal to a number of the candidate PUCCH resources.

15. A base station in a communication system, the base station comprising:

a transceiver; and
a processor connected to the transceiver, the processor configured to:

transmit, via higher layer signaling, information related to candidate physical uplink control channel (PUCCH) resources in a first radio access technology (RAT);

transmit downlink control information (DCI) for scheduling a physical uplink shared channel (PUSCH) in a second RAT, wherein the DCI includes a bit field indicating a candidate PUCCH resource included in the candidate PUCCH resources; and

receive the PUSCH,

wherein rate-matching is applied to a resource element (RE) overlapping with the candidate PUCCH resource from among REs included in the PUSCH.

# FIG. 1

One subframe (110)

$N_{symb}^{subframe,\mu}$ OFDM symbols

1 OFDM symbol (102)

1 subcarrier (103)

$K = N_{RB,x}^{max,\mu} N_{sc}^{RB} - 1$

$N_{RB}^{\mu} N_{sc}^{RB}$ subcarrier

Resource block $N_{sc}^{RB}$ subcarriers (104)

Resource element (k,l) (101)

Frequency

Time

$\bar{l}=0$

$\bar{l}=14 \cdot 2^{\mu} - 1$

$K=0$

FIG. 2

EP 4 773 540 A1

FIG. 3

FIG. 4

# FIG. 5

Periodicity (505)

Rate matching resource (502)

Frequency-domain allocation (504)

Time-domain allocation (503)

PDSCH (501)

Frequency

Time

Slot #0          Slot #1          Slot #2

EP 4 773 540 A1

FIG. 6

# FIG. 7

1 symbol
(701)

1 PRB
(702)

DMRS
(705)

CCE
(704)

REG
(703)

FIG. 8

EP 4 773 540 A1

| RA type 0 (800) | Bitmap | | 815 |
|---|---|---|---|

| RA type 1 (805) | Starting VRB 820 | Length 825 |
|---|---|---|

| RA types 0 & 1 (810) | 1 bit for RA type indication 830 | Max (payload for RA type 0, payload for RA type 1) 835 |
|---|---|---|

# FIG. 9

| c | r | j | f(j) |
|---|---|---|---|
| 0 | 0 | 0 | 0 |
| 0 | 1 | 1 | 3 |
| 1 | 0 | 2 | 1 |
| 1 | 1 | 3 | 4 |
| 2 | 0 | 4 | 2 |
| 2 | 1 | 5 | 5 |

EP 4 773 540 A1

EP 4 773 540 A1

# FIG. 10

# FIG. 11

PUCCH rsc. 1

| PUCCH rsc. 1 | PUCCH rsc. 0 |
| PUCCH rsc. 3 | PUCCH rsc. 2 |
| PUCCH rsc. 5 | PUCCH rsc. 4 |

UE A

| PUCCH rsc. 4 | PUCCH rsc. 5 |
| PUCCH rsc. 2 | PUCCH rsc. 3 |
| PUCCH rsc. 0 | PUCCH rsc. 1 |

UE B

14 symbols
(NR: slot, LTE: subframe)

Changeable

NR PUCCH
LTE PUCCH

LTE PUSCH

LTE PUCCH
NR PUCCH

LTE PUSCH only

NR PUCCH
LTE PUCCH

LTE PUSCH

NR PUSCH

LTE PUCCH
NR PUCCH

LTE/NR FDM

NR PUCCH
LTE PUCCH

NR PUSCH

LTE PUCCH
NR PUCCH

NR PUSCH only

Changeable

EP 4 773 540 A1

FIG. 12

$n_{PRB} = N_{RB}^{UL} - 1$

| | |
|---|---|
| m=1 | m=0 |
| m=3 | m=2 |

| | |
|---|---|
| m=2 | m=3 |
| m=0 | m=1 |

$n_{PRB} = 0$

← 1 subframe →

# FIG. 13

Changeable

| NR PUCCH |
| LTE PUCCH |

NR PUSCH

| LTE PUCCH |
| NR PUCCH |

Changeable

NR PUSCH only

---

| NR PUCCH |

NR PUSCH

| NR PUCCH |

NR PUSCH only without
LTE PUCCH,

---

NR PUSCH

NR PUSCH only without
LTE PUCCH and
NR PUCCH

EP 4 773 540 A1

FIG. 14

Resources not used due to RAT constraints:

RAT 0:
overlap resources between PUCCH and RB within RBG

RAT 1:
Non-contiguous resource allocation is not supported

NR PUSCH

RAT1-based NR single-UE PUSCH with LTE PUCCH

NR PUSCH

NR PUSCH

NR PUSCH

RAT0-based NR single-UE PUSCH with LTE PUCCH

FIG. 15

LTE CRS antenna port 0
LTE CRS antenna port 1
LTE CRS antenna port 2
LTE CRS antenna port 3

LTE PDCCH

NR PDSCH

Not used RE

For NR, rate matched REs

(a) Symbol/RB level rate matching

(b) CRS level rate matching

EP 4 773 540 A1

FIG. 16

UE        gNB

1. RRC reconfiguration ~1601

2. RRC reconfiguration complete ~1603

3. MAC CE ~1605

4. DCI 0_0/0_1 (UL grant) ~1607

5. PUSCH ~1609

# FIG. 17

[LTEPUCCHlocation when $\alpha > 1$]

| PUCCH rsc. 1 | PUCCH rsc. 0 |
|---|---|
| PUCCH rsc. 3 | PUCCH rsc. 2 |

$n_{PRB} = N_{RB}^{UL} - (\alpha + 1)$

| PUCCH rsc. 2 | PUCCH rsc. 3 |
|---|---|
| PUCCH rsc. 0 | PUCCH rsc. 1 |

$\frac{L}{2}$

$n_{PRB} = \alpha$

FIG. 18

[Example when B(=L) = 8 bits]

| DCI field | 0 | 0 | 0 | 1 | 1 | 0 | 0 | 1 | Octet 1 |
|---|---|---|---|---|---|---|---|---|---|

| PUCCH resource ID | 7 | 6 | 5 | 4 | 3 | 2 | 1 | 0 |
|---|---|---|---|---|---|---|---|---|

FIG. 19

# FIG. 20

[Example when L=16, M=4, B=2 bits]

| DCI field | 1 | 0 | 0 | 1 | 0 | 0 | 1 | 0 | Octet 1 |
|-----------|---|---|---|---|---|---|---|---|---------|
|           | 0 | 1 | . . . . |   |   |   |   |   | Octet 2 |

| DCI field | 14th | 7th | 4th | 1st |
|-----------|------|-----|-----|-----|

# FIG. 21

[Case 1] LTE PUCCH location: left

[Case 2] LTE PUCCH location: right

Collision between NR PUSCH DMRS and LTE PUCCH
→No transmission of NR PUSCH DMRS through rate matching indication

↑ Impossible PUSCH transmission due to absence of NR PUSCH DMRS symbol

DMRS CDM group 0

DMRS CDM group 1

NR PUSCH

LTE PUCCH

# FIG. 22

[Case 2]

NR PUSCH

LTE PUCCH

[Case 1]

Unused RE
(i.e., rate-matched RE)

Alt 1.

NR PUSCH

NR PUSCH DMRS

Alt 2.

EP 4 773 540 A1

# FIG. 23

[Case 1] LTE PUCCH location: left

[Case 2] LTE PUCCH location: right

DMRS CDM group 0
DMRS CDM group 1
NR PUSCH
LTE PUCCH

[Embodiment] Collision between NR PUSCH DMRS and LTE PUCCH
→No transmission of NR PUSCH DMRS through rate matching indication

FIG. 24

[Case 2]

NR PUSCH

NR PUSCH DMRS

LTE PUCCH

[Case 1]

# FIG. 25

| Receive RRC message | 2510 |

↓

| Receive MAC CE | 2520 |

↓

| Receive DCI | 2530 |

↓

| Transmit uplink channel | 2540 |

FIG. 26

| Transmit RRC message | 2610 |
| Transmit MAC CE | 2620 |
| Transmit DCI | 2630 |
| Receive uplink channel | 2640 |

FIG. 27

2705

UE processor

2700

UE receiver

2710

UE transmitter

FIG. 28

2805

Base station
processor

2800

Base station
receiver

2810

Base station
transmitter

## INTERNATIONAL SEARCH REPORT

| | International application No. |
|---|---|
| | **PCT/KR2024/015431** |

**A. CLASSIFICATION OF SUBJECT MATTER**

**H04L 5/00**(2006.01)i; **H04W 72/232**(2023.01)i; **H04W 72/231**(2023.01)i; **H04W 72/0446**(2023.01)i

According to International Patent Classification (IPC) or to both national classification and IPC

**B. FIELDS SEARCHED**

Minimum documentation searched (classification system followed by classification symbols)

H04L 5/00(2006.01); H04W 4/00(2009.01); H04W 72/04(2009.01); H04W 72/12(2009.01); H04W 72/14(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH(physical uplink shared channel), 후보 PUCCH 자원들(candidate PUCCH resources), 상위 계층 시그널링(higher layer signaling), DCI(downlink control information), 겹치는 RE(overlapped resource element), 레이트-매칭(rate-matching)

**C. DOCUMENTS CONSIDERED TO BE RELEVANT**

| Category* | Citation of document, with indication, where appropriate, of the relevant passages | Relevant to claim No. |
|---|---|---|
| A | KR 10-2021-0042097 A (QUALCOMM INCORPORATED) 16 April 2021 (2021-04-16) See paragraph [0119]; and figure 7. | 1-15 |
| A | KR 10-2020-0141464 A (QUALCOMM INCORPORATED) 18 December 2020 (2020-12-18) See paragraphs [0076]-[0077]; and figure 7. | 1-15 |
| A | US 2020-0344025 A1 (FUJITSU LIMITED) 29 October 2020 (2020-10-29) See paragraphs [0012]-[0014] and [0085]-[0086]; and figure 17. | 1-15 |
| A | KR 10-2020-0054312 A (ZTE CORPORATION) 19 May 2020 (2020-05-19) See paragraphs [0050]-[0052]; and figure 1. | 1-15 |
| A | US 2016-0309510 A1 (WONG, Shin Horng et al.) 20 October 2016 (2016-10-20) See claims 1-13. | 1-15 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **09 January 2025** | **09 January 2025** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/015431**

| Patent document cited in search report | | | Publication date (day/month/year) | Patent family member(s) | | | Publication date (day/month/year) |
|---|---|---|---|---|---|---|---|
| KR | 10-2021-0042097 | A | 16 April 2021 | CN | 112534898 | A | 19 March 2021 |
| | | | | CN | 112534898 | B | 17 May 2024 |
| | | | | EP | 3834512 | A1 | 16 June 2021 |
| | | | | SG | 11202100449 | WA | 25 February 2021 |
| | | | | US | 11129182 | B2 | 21 September 2021 |
| | | | | US | 2020-0053752 | A1 | 13 February 2020 |
| | | | | WO | 2020-033901 | A1 | 13 February 2020 |
| KR | 10-2020-0141464 | A | 18 December 2020 | AU | 2019-257315 | A1 | 15 October 2020 |
| | | | | AU | 2019-257315 | B2 | 22 June 2023 |
| | | | | AU | 2019-257315 | B9 | 26 October 2023 |
| | | | | BR | 112020021268 | A2 | 26 January 2021 |
| | | | | CN | 112088512 | A | 15 December 2020 |
| | | | | CN | 112088512 | B | 01 September 2023 |
| | | | | CN | 117134876 | A | 28 November 2023 |
| | | | | EP | 3782319 | A1 | 24 February 2021 |
| | | | | EP | 3782319 | B1 | 10 April 2024 |
| | | | | EP | 4346155 | A2 | 03 April 2024 |
| | | | | EP | 4346155 | A3 | 26 June 2024 |
| | | | | JP | 2021-521710 | A | 26 August 2021 |
| | | | | JP | 2023-138513 | A | 02 October 2023 |
| | | | | JP | 7314167 | B2 | 25 July 2023 |
| | | | | JP | 7541161 | B2 | 27 August 2024 |
| | | | | SG | 11202009217 | UA | 27 November 2020 |
| | | | | TW | 201944832 | A | 16 November 2019 |
| | | | | TW | I814809 | B | 11 September 2023 |
| | | | | US | 10834711 | B2 | 10 November 2020 |
| | | | | US | 11337195 | B2 | 17 May 2022 |
| | | | | US | 2019-0320431 | A1 | 17 October 2019 |
| | | | | US | 2021-0058924 | A1 | 25 February 2021 |
| | | | | WO | 2019-204223 | A1 | 24 October 2019 |
| US | 2020-0344025 | A1 | 29 October 2020 | CN | 111656814 | A | 11 September 2020 |
| | | | | CN | 111656814 | B | 08 September 2023 |
| | | | | JP | 6984666 | B2 | 22 December 2021 |
| | | | | US | 11811696 | B2 | 07 November 2023 |
| | | | | US | 12126565 | B2 | 22 October 2024 |
| | | | | US | 2024-0048331 | A1 | 08 February 2024 |
| | | | | WO | 2019-138518 | A1 | 18 July 2019 |
| KR | 10-2020-0054312 | A | 19 May 2020 | CN | 109600844 | A | 09 April 2019 |
| | | | | CN | 109600844 | B | 24 August 2021 |
| | | | | CN | 113517952 | A | 19 October 2021 |
| | | | | E0 | 63781 | T2 | 28 January 2024 |
| | | | | EP | 3691376 | A1 | 05 August 2020 |
| | | | | EP | 3691376 | A4 | 28 July 2021 |
| | | | | EP | 3691376 | B1 | 04 October 2023 |
| | | | | EP | 4254851 | A2 | 04 October 2023 |
| | | | | EP | 4254851 | A3 | 06 December 2023 |
| | | | | ES | 2963688 | T3 | 01 April 2024 |
| | | | | FI | 3691376 | T3 | 05 December 2023 |
| | | | | JP | 2021-500779 | A | 07 January 2021 |
| | | | | JP | 7090698 | B2 | 24 June 2022 |

Form PCT/ISA/210 (patent family annex) (July 2022)

## INTERNATIONAL SEARCH REPORT
### Information on patent family members

International application No.

**PCT/KR2024/015431**

| Patent document cited in search report | | | Publication date (day/month/year) | Patent family member(s) | | | Publication date (day/month/year) |
|---|---|---|---|---|---|---|---|
| | | | | KR | 10-2466577 | B1 | 11 November 2022 |
| | | | | US | 11212038 | B2 | 28 December 2021 |
| | | | | US | 11646821 | B2 | 09 May 2023 |
| | | | | US | 12021623 | B2 | 25 June 2024 |
| | | | | US | 2021-0050944 | A1 | 18 February 2021 |
| | | | | US | 2022-0368459 | A1 | 17 November 2022 |
| | | | | US | 2023-0388050 | A1 | 30 November 2023 |
| | | | | WO | 2019-062524 | A1 | 04 April 2019 |
| US | 2016-0309510 | A1 | 20 October 2016 | CN | 107534834 | A | 02 January 2018 |
| | | | | CN | 107534834 | B | 06 April 2021 |
| | | | | CN | 113132953 | A | 16 July 2021 |
| | | | | EP | 3286963 | A1 | 28 February 2018 |
| | | | | EP | 3286963 | B1 | 16 March 2022 |
| | | | | EP | 3944696 | A1 | 26 January 2022 |
| | | | | ES | 2911708 | T3 | 20 May 2022 |
| | | | | JP | 2018-514163 | A | 31 May 2018 |
| | | | | JP | 2021-073779 | A | 13 May 2021 |
| | | | | JP | 6826540 | B2 | 03 February 2021 |
| | | | | TW | 201703573 | A | 16 January 2017 |
| | | | | TW | I608747 | B | 11 December 2017 |
| | | | | US | 9769847 | B2 | 19 September 2017 |
| | | | | WO | 2016-170425 | A1 | 27 October 2016 |

Form PCT/ISA/210 (patent family annex) (July 2022)